# EUROPEAN PATENT SPECIFICATION

(11) **EP 1 337 603 B1**
(45) Date of publication and mention of the grant of the patent: **12.10.2011**
(21) Application number: 01982229.5
(22) Date of filing: 31.08.2001
(51) Int. Cl.: C09K 19/44, C09K 19/46, C09K 19/30, C09K 19/42

(54) **ELECTRO-OPTICAL LIQUID CRYSTAL DISPLAY AND LIQUID CRYSTALLINE MEDIUM**
ELEKTROOPTISCHE FLÜSSIGKRISTALLANZEIGE UND FLÜSSIGKRISTALLINES MEDIUM
DISPOSITIF D'AFFICHAGE A CRISTAUX LIQUIDES ELECTRO-OPTIQUE ET MILIEU CRISTALLIN LIQUIDE

(30) Priority: 29.11.2000 EP 00126049
(43) Date of publication of application: 27.08.2003
(73) Proprietor: Merck Patent GmbH, 64293 Darmstadt (DE)
(72) Inventor: ICHINOSE, Hideo, Kanagawa Prefecture 250-0034 (JP); SUGIYAMA, Yasushi, Kanagawa-prefecture 243-0014 (JP); NAKAJIMA, Shiniji, Kanagawa Prefecture 243-0816 (JP); IIJIMA, Masahiro, Zama-shi, Kanagawa Prefecture 228-0023 (JP); HECKMEIER, Michael, 69502 Hemsbach (DE); PLACH, Herbert, 64291 Darmstadt (DE); SCHOEN, Sabine, 45701 Herten (DE)
(86) International application number: PCT/EP2001/010056
(87) International publication number: WO 2002/044304

(56) References cited:
- DE-A- 10 018 598
- DE-A- 19 943 649
- US-A- 6 045 878
- KLEMENT D ET AL: "26.2: LIQUID-CRYSTAL MATERIAL DEVELOPMENT OF IPS TFT DISPLAYS" 1998 SID INTERNATIONAL SYMPOSIUM DIGEST OF TECHNICAL PAPERS. ANAHEIM, CA, MAY 17 - 22, 1998, SID INTERNATIONAL SYMPOSIUM DIGEST OF TECHNICAL PAPERS, SANTA ANA, CA: SID, US, vol. 29, 17 May 1998 (1998-05-17), pages 393-396, XP000792545 ISSN: 0098-966X

## Description

The invention relates to an electro-optical liquid crystal display with an electrode structure for the reorientation of the liquid crystalline medium which generates an electrical field with a component parallel to the liquid crystal layer which is sufficient to affect the switching of the liquid crystalline medium. The switching of the liquid crystalline medium takes place essentially in the plane of the liquid crystal layer. The liquid crystalline medium has a positive anisotropy of the dielectric permittivity and contains two or more compounds of formula I 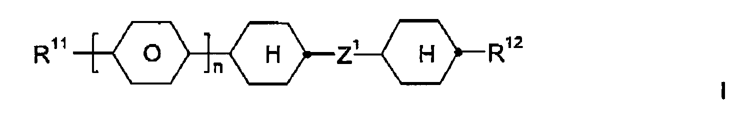 wherein
- R¹¹: is alkyl or alkoxy with 1 to 7 C-atoms or alkoxyalkyl with 2 to 7 C-atoms,
- R¹²: is alkenyl or alkenyloxy with 2 to 7 C-atoms,
- Z¹: is -CH₂-CH₂- or a single bond and
- n: is 0 or 1 and
one or more compounds of formula IVb10 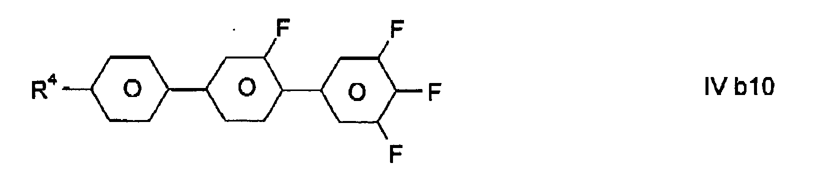 wherein
- R⁴: is alkyl with 1 to 7 C atoms.

In most conventional types of liquid crystal displays, like in TN, STN, OMI and AMD-TN displays, as well as in some more recently interesting displays like VAN (or ECB) and OCB displays electrical fields which are substantially perpendicular to the liquid crystal layer are used to switch the orientation of the liquid crystals.

For example WO 91/10936 discloses a liquid crystal display using an electrical fiels with a significant component parallel to the liquid crystal layer used to switch the liquid crystals mainly in the plane of the liquid crystal layer called IPS from In Plane Switching. The principle of operation of liquid crystal displays with such an electrical field are described for example in R.A. Soref, Journal of Applied Physics, Vol. 45, Nr. 12, S. 5466-5468 (1974).

Several possibilities for the design of the elecrtodes, as well as different ways of addressing of such displays are given e. g. in EP 0 588 568. Also DE 198 24 137 teaches different constructions of such IPS displays.

Liquid crystalline media for such IPS displays are described e. g. in DE 198 48 181 and in the non prepublished DE 100 19 061.

DE 100 18 598 A and US 6,045,878 (A) are related to liquid crystal media for IPS displays, like the present application. They, however, disclose different liquid crystalline media.

DE 199 43 649 A is directed to liquid crystal media media showing an improved, reduced temperature dependence of the dielectric anisotropy and an improved, reduced frequency dependence of the dielectric anisotropy.

D. Klement and K. Tarumi, paper 26.2, Intl. Symposium of SID 1998, SID 98 Digest, p. 393 to 396 describes the desired improvements for liquid crystal media for use in IPS displays.

IPS displays of the state of the art have still severe shortcommings for several applications. One of the most severe problems is their long response times, which are significantly longer than those of e. g. TN or VAN displays. Besides the response times, which are too long, the operation voltages have to be improved. This means that they are too high for some applications. Obviously other requirements, like long operational life time, stability both for storage and operation at extreme temperatures (high as well as low) and under illumination have to be fulfilled at the same time. One constituent of such displays with a crucial influence on these performance criteria is the liquid crystal medium used. Thus, there is a strong demand for improved liquid crystalline media which do not show the disadvantages of the known materials, or at least do so only to a lesser extent. These, in particular, have to exhibit a sufficiently wide nematic phase range, a low tendency to crytallize at low temperatures, suitable values of the birefringence, in most cases preferably low values of the birefringence and a sufficiently high specific resistivity. Especially they have to show small threshold voltages (V₁₀) and small rotational viscosities (γ₁), leading to schort response times.

It has been found, that, surprisingly, this task can be solved by the use of liquid crystalline media having a positive anisotropy of the dielectric permittivity and containing two or more compounds of formula I 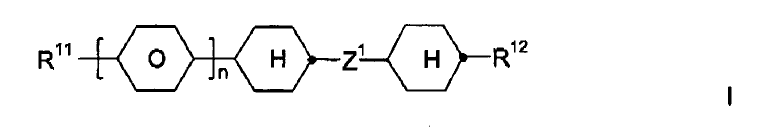 wherein
- R¹¹: is alkyl or alkoxy with 1 to 7 C-atoms or alkoxyalkyl with 2 to 7 C-atoms,
- R¹²: is alkenyl or alkenyloxy with 2 to 7 C-atoms,
- Z¹: is -CH₂-CH₂- or a single bond and
- n: is 0 or 1 and
one or more compounds of formula IVb10 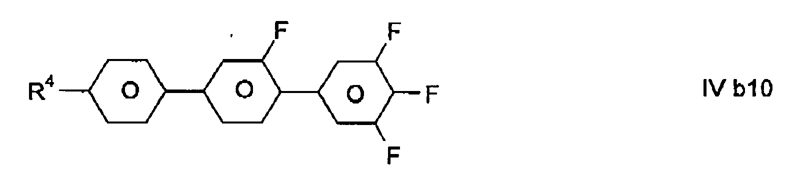 wherein
- R⁴: is alkyl with 1 to 7 C atoms.

The liquid crystalline media according to the invention are characterized by their relatively high clearing points and their small rotational viscosities as well as their low threshold voltages.

The invention resides, besides the liquid crystalline medium, in an electro-optical display with an electrode structure generating an electrical field with a significant component parallel to the liquid crystal layer containing a liquid crystalline medium having a positive anisotropy of the dielectric permittivity and containing at least two mesogenic compounds of formula I as given above.

Especially preferred are liquid crystal displays containing a liquid crystalline medium containing one or more compounds selected from the group of formulae Ia and Ib 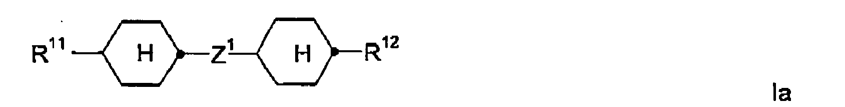 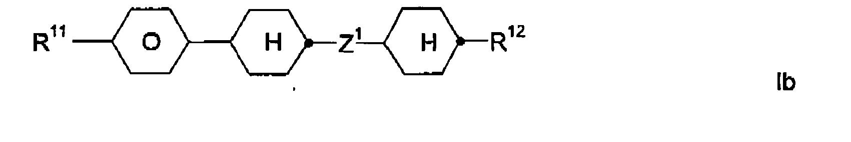 wherein the parameters have the meanigs given under formula I above and preferably
- R¹¹: is alkyl with 1 to 5 C-atoms or alkoxy with 1 to 5 C-atoms, preferably alkyl,
- R¹²: is alkenyl or alkenyloxy with 2 to 7 C-atoms, preferably alkenyl and
- Z¹: is a single bond.

Particularly preferred are liquid crystal displays containing a liquid crystalline medium containing one or more compounds each of formula la and of formula Ib.

More particularly preferred are liquid crystal displays containing a liquid crystalline medium containing one or more compounds selected from the group of formulae Ia1, Ia2, Ib1 and Ib2 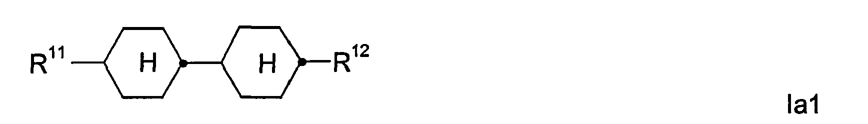 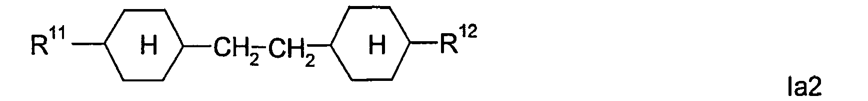 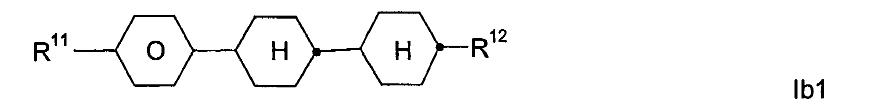 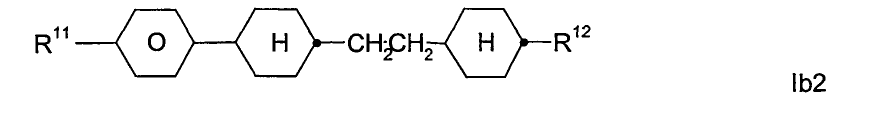 wherein the parameters have the meanigs given under formula I above and preferably those given under the respective formulae la and Ib above.

Especially preferred are liqiud crystal displays containing liquid crystalline media containing one or more, preferably two, three or more, compounds of formula Ia1.

Particularly preferred are liqiud crystal displays containing liquid crystalline media containing one, two or more compounds of formula Ib, preferably of formula Ia1, besides one or more, preferably two or more, compounds of formula Ia, preferably of formula Ia1.

Preferably the liquid crystal displays contain liquid crystalline media containing one or more mesogenic compounds of the formula II 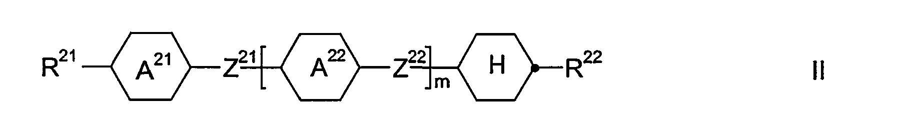 wherein
- R²¹: is alkyl or alkoxy with 1 to 7 C atoms or alkenyl, alkenyloxy or alkoxyalkyl with 2 to 7 C atoms,
- R²²: is alkyl with 1 to 7 C atoms or alkenyl with 2 to 7 C atoms,
- Z²¹ and Z²²: when present, are, independently of each other -COO-, -OCO-, -CF₂-O-, -O-CF₂-, -CH₂-CH₂-, -CH=CH-, - CF=CF-, -CF=CH-, -CH=CF- or a single bond, preferably a single bond, 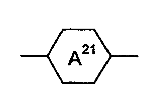
and 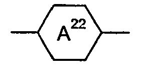 when present, are, independently of each other, 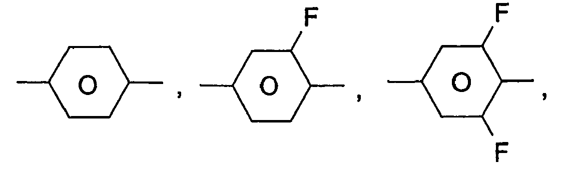 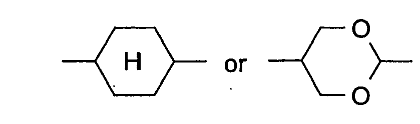 and
- n: is 0, 1 or 2,
with the condition, that compounds of formula I are excluded.

Preferably the liquid crystal displays contain liquid crystalline media containing one or more mesogenic compounds of the formula II selected from the group of formulae IIa to IIc

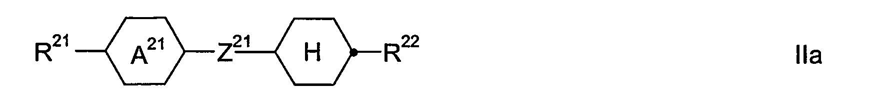

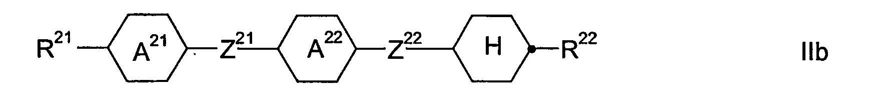

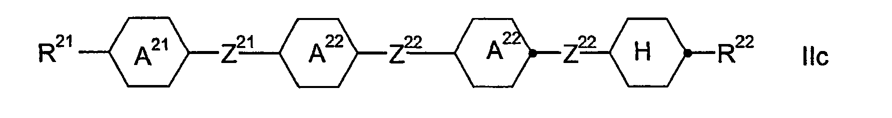

Wherein the parameters have the respective meanings given under formula II above.

Further preferred are liquid crystal displays containing liquid crystalline media containing compounds of formula III 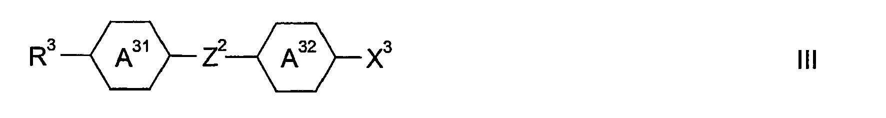 wherein
- R³: is alkyl or alkoxy with 1 to 7 C atoms or alkenyl, alkenyloxy or alkoxyalkyl with 2 bis 7 C atoms, 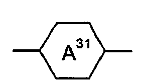
and 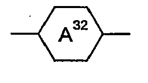 each independently of one another are 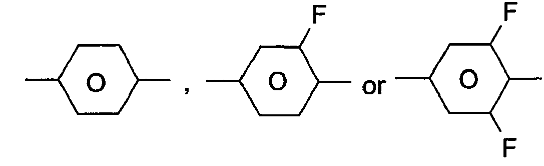 and 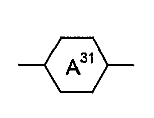 may also be 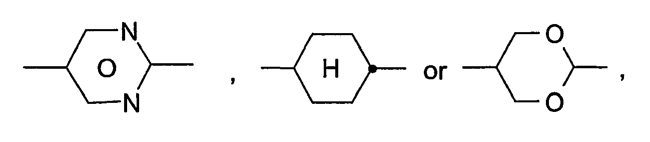
- Z³: is -CH₂-CH₂, -COO-, -CF₂O- or a single bond and
- X³: is F, Cl, CN or NCS, preferably CN.

Especially preferred are liqiud crystalline media containing one or more compounds of formula III wherein
- X³: is CN, 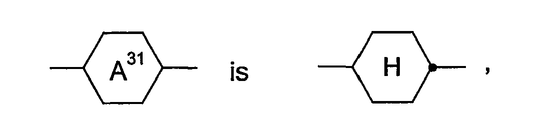 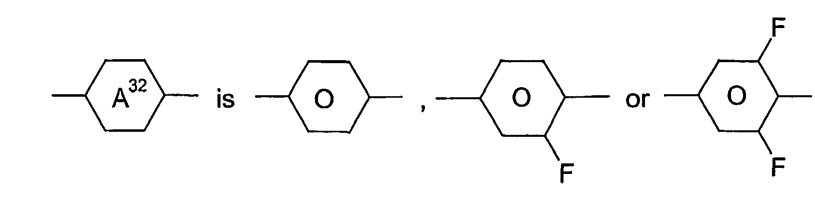 and
- Z³: is a single bond.

Further preferred are liqiud crystalline media containing one or more compounds of formula III wherein
- Z³: is a single bond,
- X³: is CN,

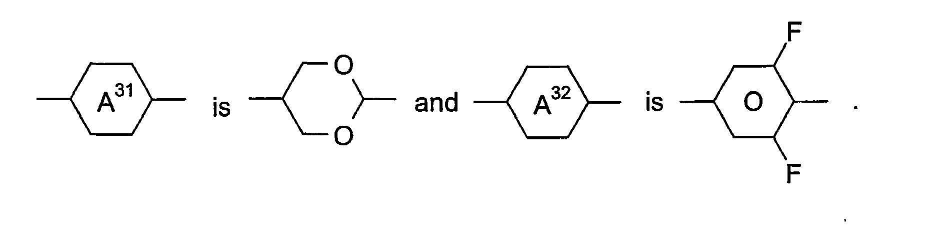

Further preferred are liqiud crystalline media containing one or more compounds of formula III wherein
- Z³: is a single bond,
- X³: is CN,

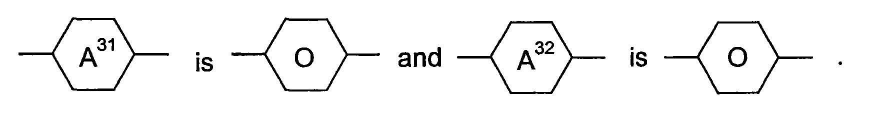

Further preferred are liqiud crystalline media containing one or more compounds of formula III wherein
- Z³: is a single bond,
- X³: is CN,

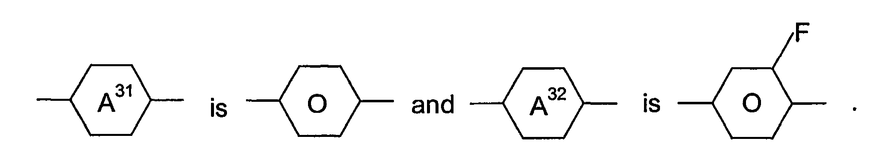

Further preferred are are liqiud crystalline media containing one or more compounds of formula III wherein
- Z³¹: is -CH₂-CH₂- or a single bond.

Preferred are liquid crystal displays containing liquid crystalline media containoing one, two, three or more compounds of formula IV 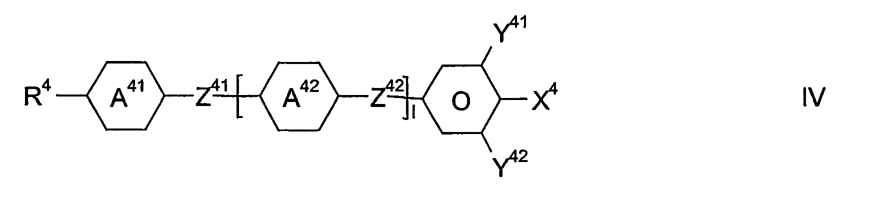 wherein
- R⁴: is alkyl or alkoxy with 1 to 7 C atoms or alkenyl, alkenyloxy or alkoxyalkyl with 2 to 7 C atoms, 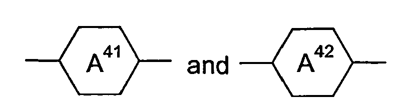
each independently of one another are 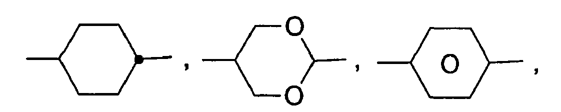 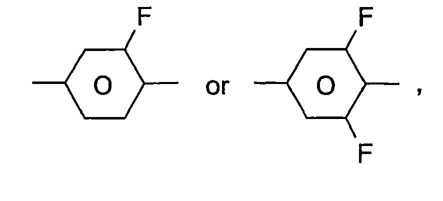
- Z⁴¹ and Z⁴²: each independently of one another are -CF₂O-, -COO-, -CH₂CH₂-, -CF=CF-, -CH=CH-, -CF=CH-, -CH=CF- or a single bond,
- I: is 0 or 1,
- X⁴: OCF₃, OCF₂H, CF₃ or F, and
- Y⁴¹ and Y⁴²: each independently of one another H or F.

Expecially preferred are liquid crystal dislpays containing liquid crystalline media containing compounds of formula IV, wherein at least one of

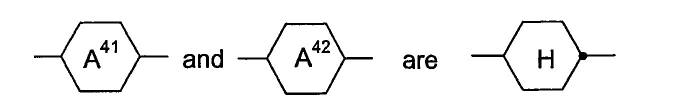

Further preferred ar liquid crystalline media containing one oe more compounds of formula IV wherein Z⁴¹ and Z⁴² each independently of one another are -CH₂CH₂- or a single bond.

Further preferred are media containing one oer more compounds of formula IV wherein X⁴ is OCF₃ and Y⁴¹ and Y⁴² each are H and one oer more compounds of formula IV wherein X⁴ and Y⁴¹ and Y⁴² each are F.

Especially preferred are liquid crystalline media containing at least one compound of formula I, preferably at least one compound of formula la and at least one compound of formula Ib, and at least one compound of formula II and at least one compound of formula III.

Particularly preferred are liquid crystal displays containing liquid crystalline media containing one or more compounds of formula III selected from the group of formulae IIIa to IIIt. 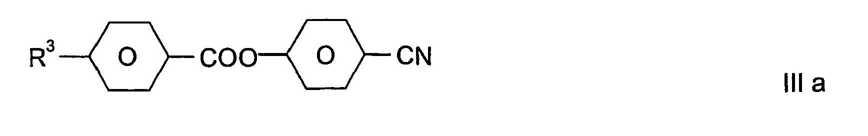 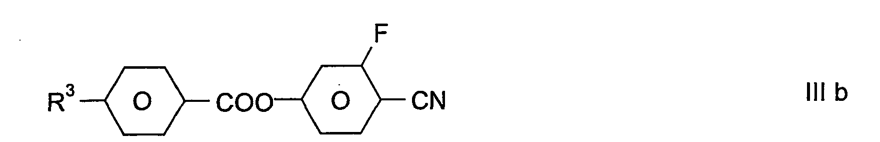 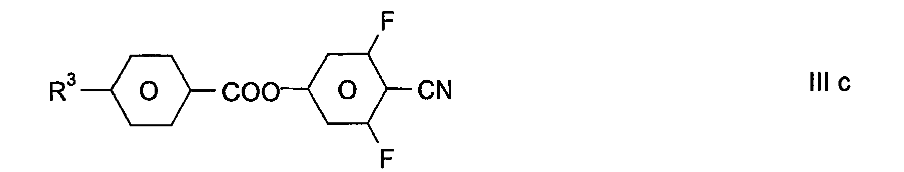 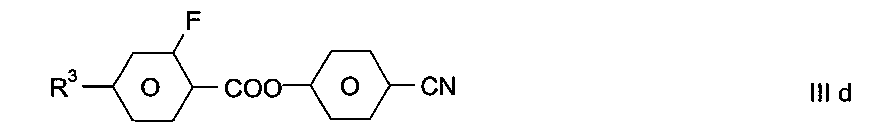 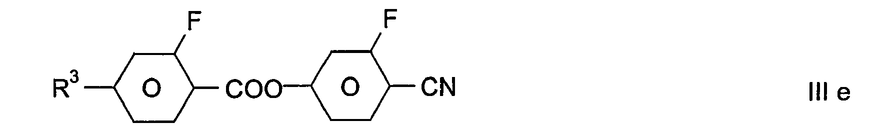 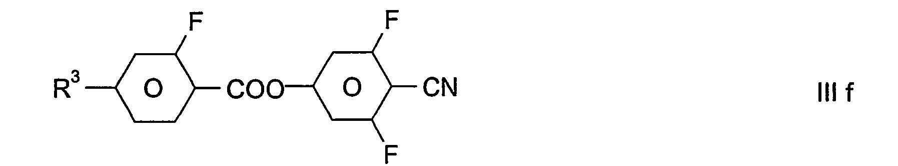 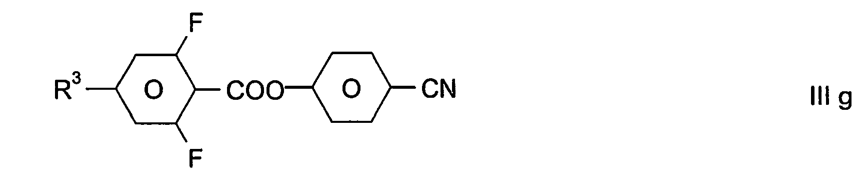 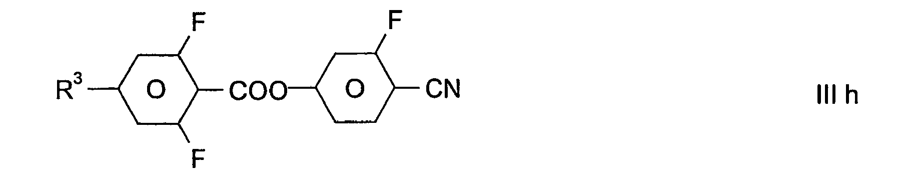 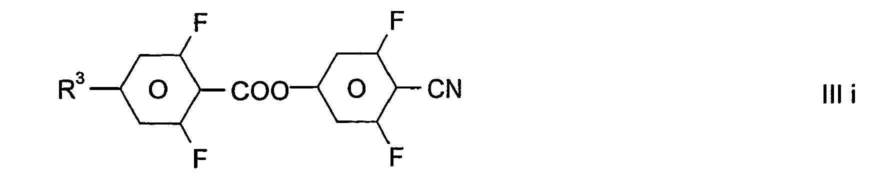 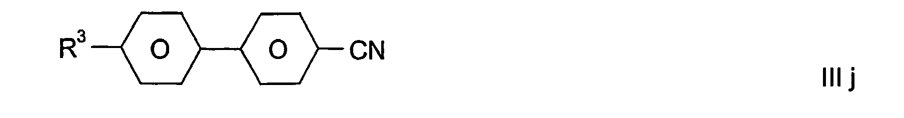 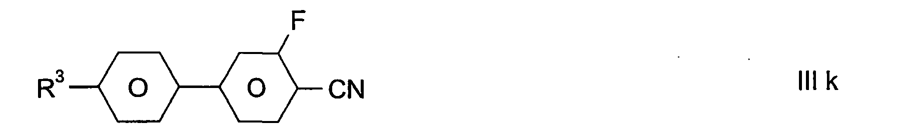 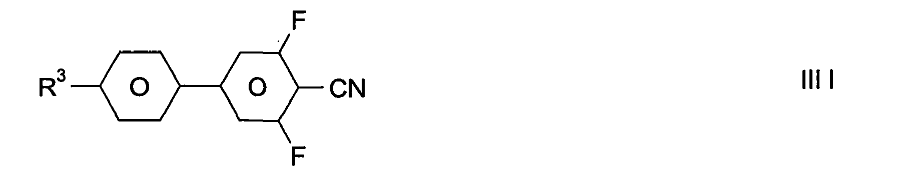 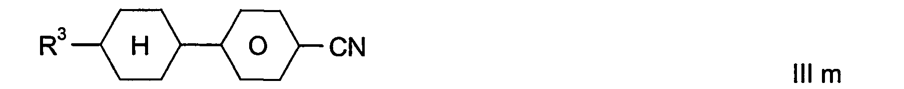 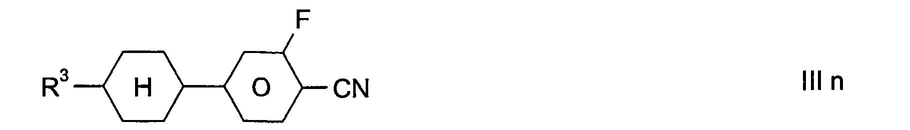 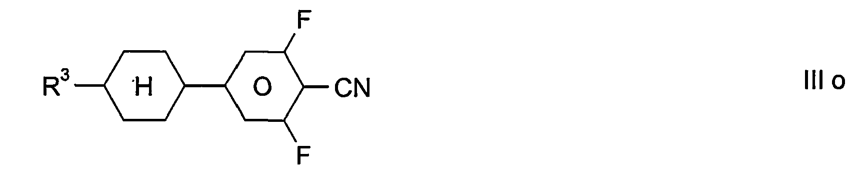 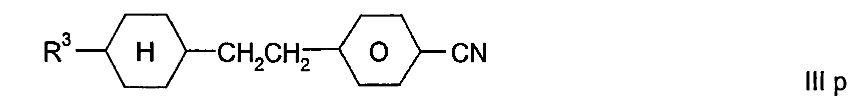 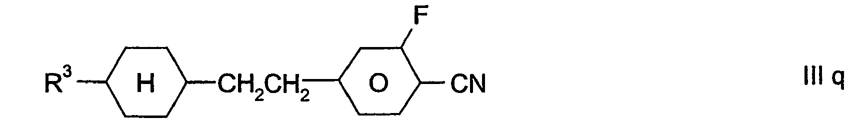 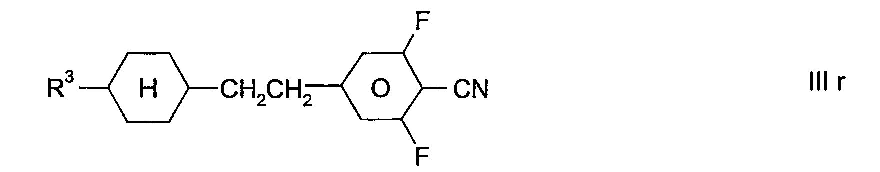 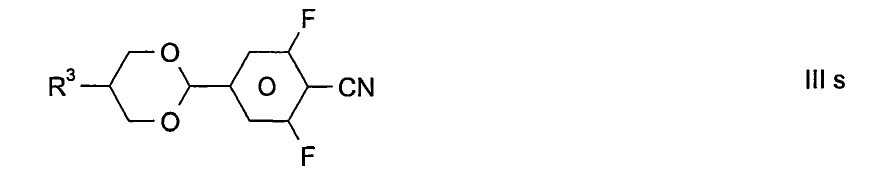 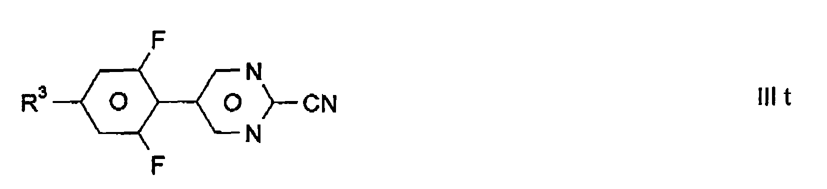 wherein R³ has the meaning given under formula III above.

Most particularly preferred, the liquid crystal display contains a liquid crystal medium containing one oer mora compounds selected from the group of formulae III b, III c, III i, III j, III m, III o bis III s, most preferrably of formulae III b, III c, III i, III m, III o und III s.

Further preferred are displays containing media containing compound selected from the group of compounds of formulae Ia1-1 and Ia1-2 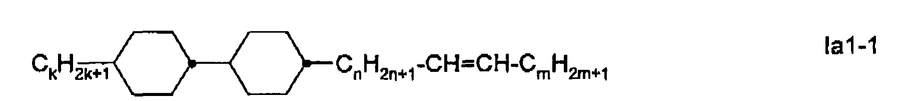 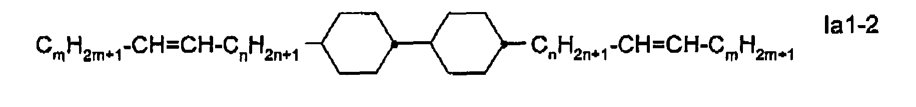 wherein
- k: is 1, 2, 3, 4 or 5,
- m and n: each independently from one another are 0, 1, 2 or 3
- m + n: is less or equal to 5 and
- o: is 0 or 1.

In a preferred embodiment the displays contain media containing one or more compounds of formula I in a concentration relative to the whole medium in a concentration in the range from 20%, preferably 27%, to 75%, preferably from 40% to 70%, more preferably from 45% to 65% and most preferred from 50% to 60%.

In a further preferred embodiment, which can be identical to the previous one, the displays contain media containing one or more compounds of formula la, preferably of formula Ia1, in a concentration relative to the whole medium in a concentration in the range from 15% to 60%, preferably from 20% to 55%, more preferably from 25% to 50% and most preferred from 29% to 45%.

In a further preferred embodiment, which can be identical to the previous ones, the displays contain media containing one or more compounds of formula Ib, preferablay of formula Ib1, in a concentration relative to the whole medium in a concentration in the range from 1% to 40%, preferably from 5% to 35%, more preferably from 10% to 30% and most preferred from 15% to 30%.

In case the medium contains only compounds of formula I which are compounds of formula Ia their concentration is 22% or more, preferrably 25% or more and most preferrably 28% or more. In this embodiment the media preferably contain two or more compounds of formula Ia, preferably of formula Ia1.

Preferably, however the media contain one or more compounds each of formulae Ia and Ib. In this embodiment the media preferably contain two, three or more compounds of formula Ia, preferably of formula Ia1 and the concentration of all compounds of formula I in the medium is 37% or more preferably 43% or more.

Further preferred are displays according to the invention which are addessed by a matrix of active electrical switching elements which have a non-linear voltage-current characteristic.

The media used according to the invention generally have a birefringence (Δn) at 20°C which is In the range from 0.060 to 0.150, preferably from 0.065 to 0.140 and most preferably from 0.070 to 0.130. The clearing points of the media preferably are in the range from 60°C to 110°C, more preferably from 65°C to 100°C and most preferably from 67°C to 90°C.

The rotational viscosity (γ₁) of the media used according to the invention at 20°C is, as a rule 100 mPa·s or less, preferably 90 mPa·s or less, more preferably 80 mPa·s or less and most preferably 70 mPa·s or less. Obviously the rotational viscosity of the inventive liquid crystalline media is related to the clearing point and especially to the polarity, i.e. the dielectrical anisotropy, of the media. Thus for media with lower clearing points and for media with lower dielectrcal anisotropy lower rotational viscasities can be achieved. E. g. for media with a clearing point of 70°C and a dielectrical anisotropy of 12.5 or less a rotational viscosity of 85 mPa·s or less, preferably of 80 mPa·s or less most preferably of 75 mPa·s or less is achieved, whereas for media with a clearing point of 70°C and a dielectrical anisotropy of 12 or less a rotational viscosity of 80 mPa·s or less, preferably of 75 mPa·s or less most preferably of 70 mPa·s or less is achieved and for media with a clearing point of 70°C and a dielectrical anisotropy of 7 or less a rotational viscosity of 75 mPa·s or less, preferably of 70 mPa·s or less most preferably of 60 mPa·s or less is achieved.

The specific resistance of the media according to the invention at 20°C generally is in the range from 5 x 10¹⁰ to 5 x 10¹³ Ω · cm, preferably from 5x10¹¹ to 5x10¹² Ω·cm.

The liquid crystalline media used according to the invention are stable against storage in liquid crystal display test cells at-30°C for 1000 h or more, preferably at -40°C for 500 h or more and most preferably at -40°C for 1000 h or more.

The liquid crystalline media used according to the invention consist of 5 to 30 compounds, preferably of 6 to 20 compounds and most preferably of 7 to 16 compounds.

The term "alkyl" in this application comprises straight chain and branched alkyl groups with 1 to 7 carbon atoms, preferably the straight chain groups methyl, ethyl, n-propyl, n-butyl, n-pentyl, n-hexyl and n-heptyl. Groups with 2 to 5 carbon atoms are preferred, unless explicitly stated otherwise.

The term "alkenyl" in this application comprises straight chain and branched alkenyl groups with 2 to 7 carbon atoms, preferably the straight chain groups, Particularly preferred alkenylgroups are C₂ to C₇ 1 E-alkenyl, C₄ to C₇ 3E-alkenyl, C₅ to C₇ 4-alkenyl, C₆ to C₇ 5 alkenyl und C₇ 6-alkenyl, most preferred C₂ to C₇ 1 E-alkenyl, C₄ to C₇ 3E-alkenyl and C₅ to C₇ 4-alkenyl. Exemplary alkenyl groups which are particularly preferred are vinyl, 1E-propenyl, 1E-butenyl, 1E-pentenyl, 1E-hexenyl, 1E-heptenyl, 3E-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Groups with up to 5 C atoms are preferred unless explicitly stated otherwise.

The term "alkoxyalkyl" in this application comprises preferably straigt chain groups of the formula CₙH₂ₙ₊₁-O-(CH₂)ₘ, wherein n und m each are 1 to 6 and n+m is 2 to 7. Preferably m is 1 and n is 1 to 4.

Choosing R¹¹ to R⁵² appropriately, the properties of the liquid crystalline media can be modified. Thus broad ranges of the nematic phase can be achieved and the response times, the threshold voltage and the steepness of the oelectro-optical characteristic can be adapted. E. g. 1 E-alkenyl groups, 3E-alkenyl groupd and 2E-alkenyloxy groups generally lead to shorter response times and more stable nematic phases. Shorter side chains, especially with one or two C aloms only also improve the response time significantly. The maximum concentration of compounds with such groups in the media, however is limited by the desired clearing point.

In a particularly preferred embodiment the media used according to the present invention contain one or more compounds of formula IVc.

The liquid crystalline media which are used according to the present invention contain besides two or more compounds of formula I preferably three to 40 other compounds, particularly preferred four to 30 other compounds and most preferrably seven to 15 other compounds. These other compounds are preferrably selected from the group of nematic or nematogenic, preferably monotropic or isotropic, compounds.

The liquid crystalline media which are used according to the present invention contain besides two or more compounds of formula I preferably contain 38 to 67%, especially preferred 45 to 55% of compounds of formula I. They contain preferrably three, four, five, six or more compounds of formula I

The consruction of the electro-optical displays according to the present invention corresponds to the characteristic construction of an IPS-display as described e. g. in WO 91/10936 or EP 0 588 568. The term "characteristic construction" is construed rather braodly here and encompasses all known modificatoins of the IPS display, especially IPS displays driven by an active matrix and IPS displays with electrode structures with nonlinar electrodes and/or with non-constant electrode spacing in an individual pixel.

A significant difference of the displays according to the present inventon to thoose realized so far, however, is the choice of the composition and the properties of the liquid crystalline medium used.

The liquid crystalline media used according to the present invention are prepared by conventional methods. As a rule the required amounts of the compounds are successively dissolved in the compound or compounds used as the mjor constituent of the medium. This is done preferentially at elevated temperature in order to facilitate mixing of the compounds. Further other known methods of preparation can be emplyed. E. g. the media can be prepared by mixing pre-mixtures, which may be mixtures of homologuous compounds or ready to use mixtures which can be costituents of so called "multi bottle systems".

The liquid crystalline media optionally contain further additives known to the expert. E. g. the media can contain 0% to 15%, preferably 0% to 10%, of pleochroic dyes and/or chiral dopants. The concentrations of the single compounds added are in the range from 0.01% to 6%, preferably from 0.1 % to 3%. The concentrations of these additives are, however, not considered in the concentrations and ranges of the concentration ranges of the main compounds making up the media (i. e. of formulae I to V and of the optional compounds).

Throughout this application 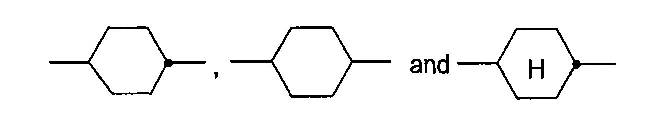 represents trans-1,4-cyclohexylen.

The physical properties of the liquid cystalline media have been and are determined as described in "Physical Properties of Liquid Crystals" Hrg. W. Becker, Merck KGaA, Status Nov. 1997, unless explicitly stated otherwise All physical properties are determined at or specified for 20°C, unless explicitly stated otherwise.

C indicates a crystalline, S a smectic, S_{C} a smectic C, S_{A} a smectic A, N a nematic and I the isotropic phase. V₀ is the capacitive threshold. Δn is the optical aisotropy (birefringence) at 589 nm. Δε is the dielektrical anisotropy at 1 kHz. The electro-optical properties were determined in planar cells. The cells are operated in the normally white mode.

The following examples illustrate the present invention, without limiting it in any way.

The rotational viscositied were determind with a calibrated instument with which the value for ZLI-4792 (a product of Merck KGaA) at 20°C was determined as 133 mPa · s.

The satbility against storage at deep temperatures has been determined in sealed testcells with an optical retardation of approximately 0.5 µm using CU-1511 of HDM (Hitachi DuPont Mico-Systems), Japan as orientation layer. Sets of five test cells each were sandwiched with crossed adhesive polarisers and stored in a temperature controlled environment at fixed temperatures of 0°C, -10°C, -20°C, -30°C and -40°C, respectively. After time intervals of 24 h each the cells were inspected visually for changes in appearance. The last time of storage for which no change in any one of the five test cells of a given set of test cells at a given temperature had been observed was given as the storage time at that temperature (tₛₜₒᵣₑ (T)).

In this application and in the following examples the structures of the compounds are given by abbreviations, also called acronyms. These are coded according to the following two tables A and B. All groups CₙH₂ₙ₊₁ and CₘH₂ₘ₊₁ are straight chain alkyl groups witt n and m C atoms, respectively. The code of table B is self evident. Table A list the acronym for the core of the molecule only. The definion of the individual compounds is achieved by addition of a additional code seperated by a hyphen from the code for the core. The codes for the substituents R¹, R², L¹ and L² are as follows:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nF.F | CₙH₂ₙ₊₁ | F | F | H |
| nF.F.F | CₙH₂ₙ₊₁ | F | F | F |
| nOF | OCₙH₂ₙ₊₁ | F | H | H |
| nCl | CₙH₂ₙ₊₁ | Cl | H | H |
| nCl.F | CₙH₂ₙ₊₁ | Cl | F | H |
| nCl.F.F | CₙH₂ₙ₊₁ | Cl | F | F |
| nCF3 | CₙH₂ₙ₊₁ | CF₃ | H | H |
| nCF3.F | CₙH₂ₙ₊₁ | CF₃ | F | H |
| nCF3.F.F | CₙH₂ₙ₊₁ | CF₃ | F | F |
| nOCF3 | CₙH₂ₙ₊₁ | OCF₃ | H | H |
| nOCF3.F | CₙH₂ₙ₊₁ | OCF₃ | F | H |
| nOCF3.F.F | CₙH₂ₙ₊₁ | OCF₃ | F | F |
| nOCF2 | CₙH₂ₙ₊₁ | OCHF₂ | H | H |
| nOCF2.F | CₙH₂ₙ₊₁ | OCHF₂ | F | H |
| nOCF2F.F | CₙH₂ₙ₊₁ | OCHF₂ | F | F |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | C≡C-CₘH₂ₘ₊₁ | H | H |

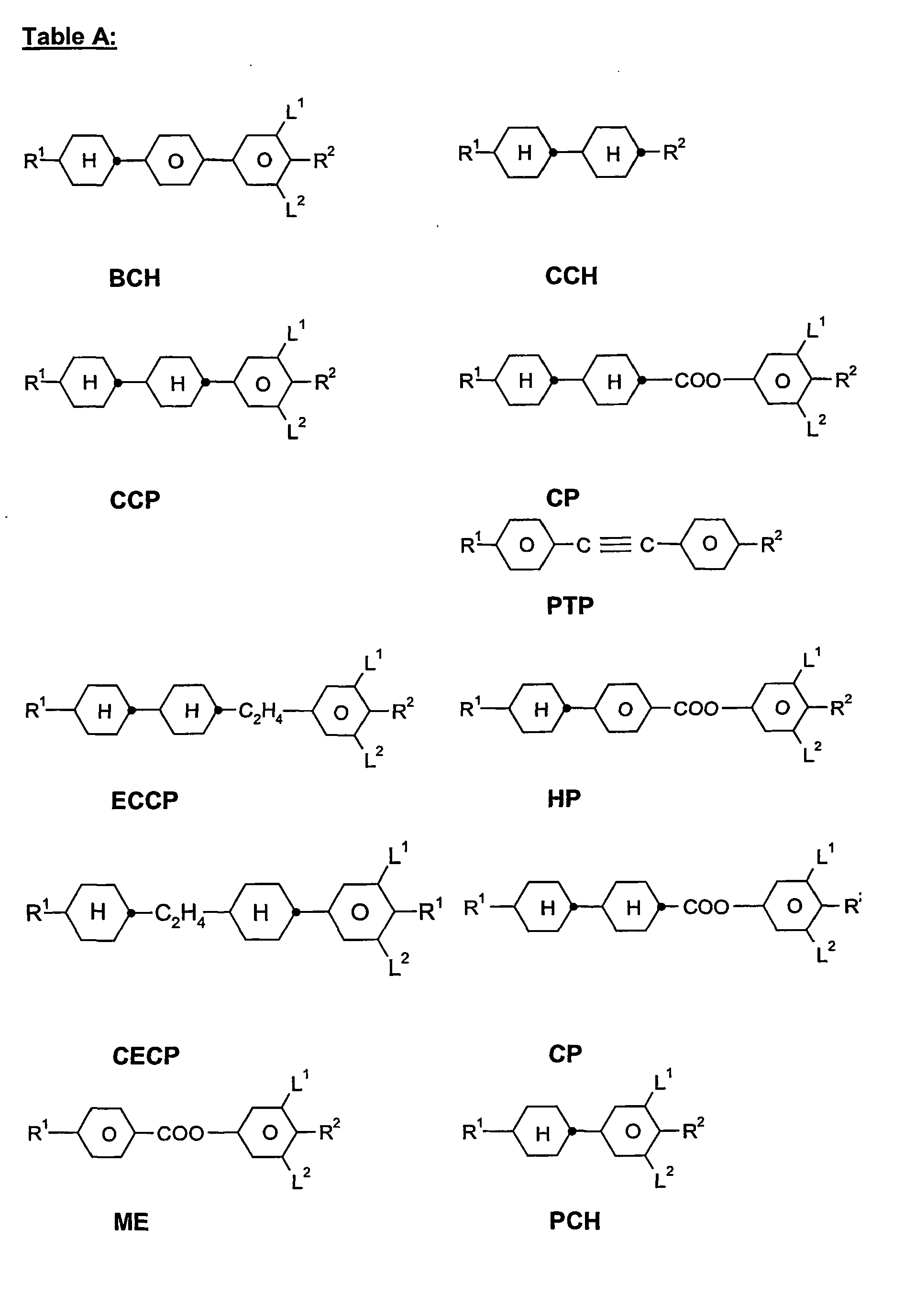

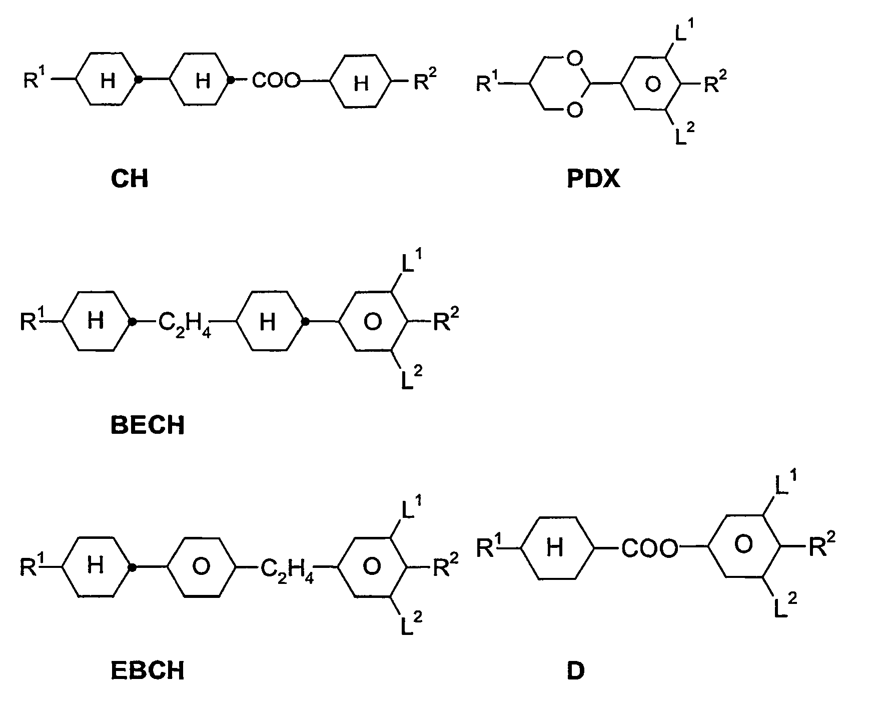

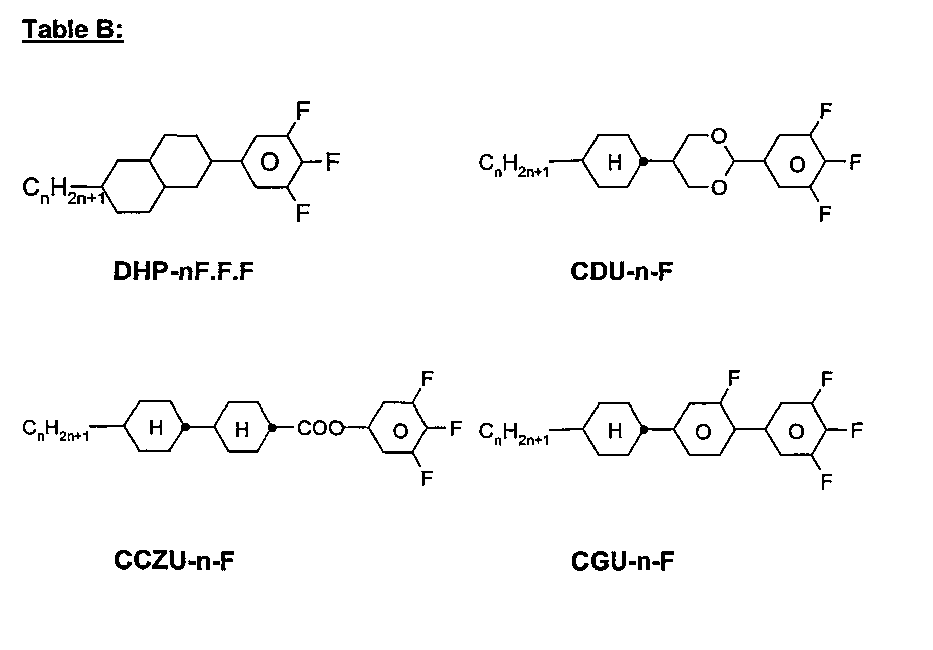

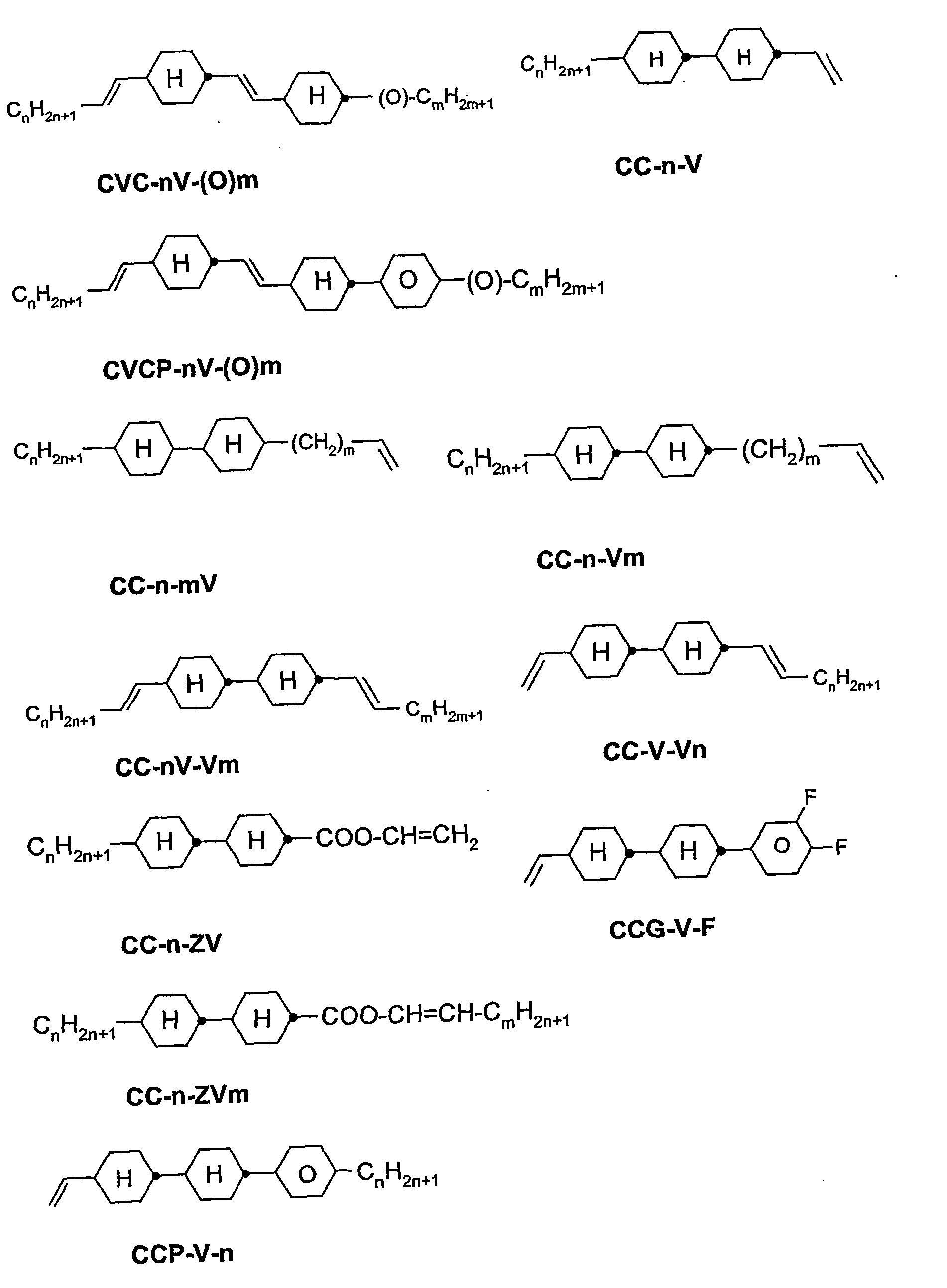

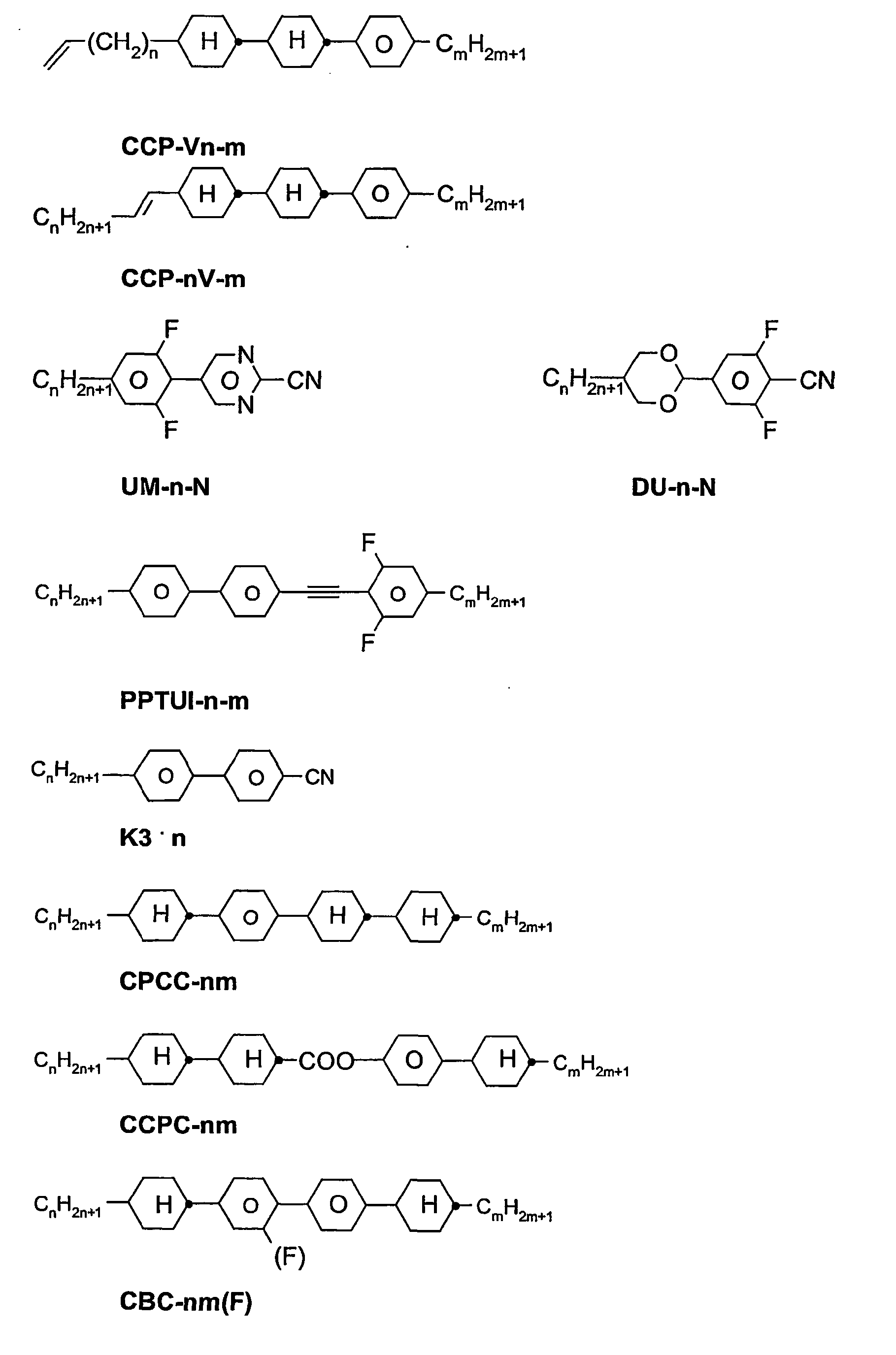

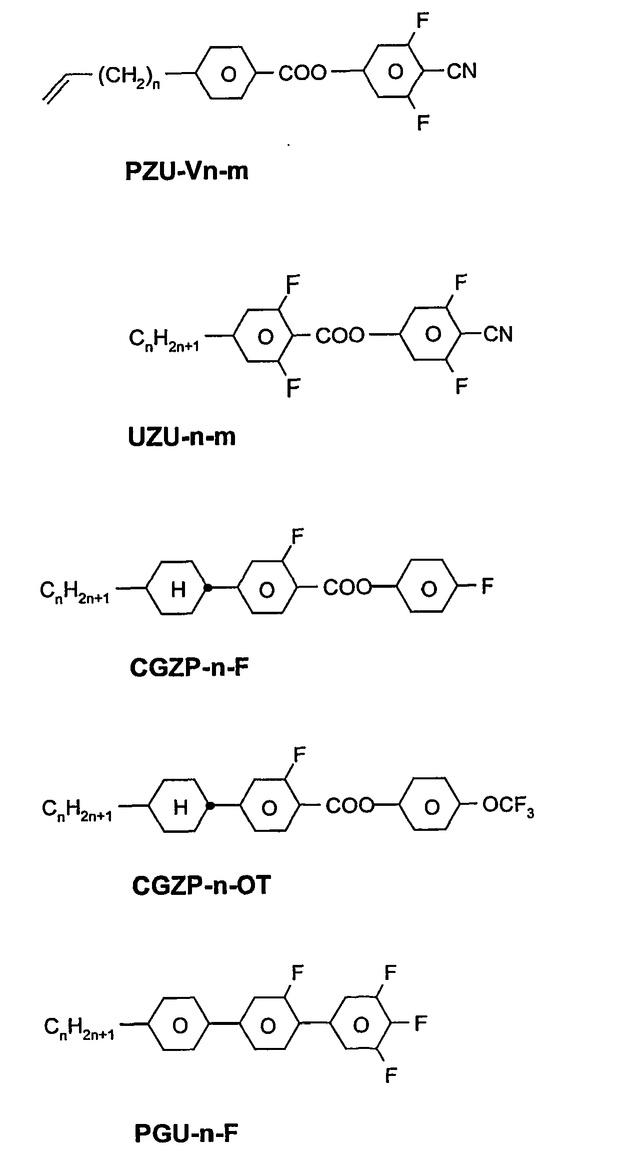

Prefered displays contain liquid crystalline media containing, besides two or more compounds of formula I and one or more compounds of formula IV b 10, one or more compounds selected from the group of formulae of tables A and B.

Especially prefered are IPS displays containing media containing
- each one or more compounds of two different types of compounds selected from the group of formulae of table A and each one or more compounds of two different types of compounds selected from the group of compounds of formulae of table B and/or
- each one or more compounds of three different types of compounds selected from the group of formulae of table A and/or
- each one or more compounds of three different types of compounds selected from the group of formulae of table B and/or
- each one or more compounds of five different types of compounds selected from the group of formulae of tables A and B.

### Example 1

An IPS-display is prepared containing a nematic liquid crystal mixture having the following composition and physical properties

| Compound Abbreviation | Conc. /% | Physical Properties |
|---|---|---|
| CC-5-V | 16.0 | T(N,I) = 70.0 °C |
| CC-3-V | 18.0 | T(S,N) < -30 °C |
| CC-3-V1 | 10.0 | nₑ(589 nm, 20 °C) = 1.5860 |
| PCH-301 | 9.0 | Δn (589 nm, 20 °C) = 0.0953 |
| PCH-3 | 11.0 | ε_{⊥} (1 kHz, 20 °C) = 3.1 |
| K 6 | 5.0 | Δε (1 kHz, 20 °C) = 4.1 |
| K 9 | 5.0 | γ₁ (20 °C) = 54 mPa·s |
| CCP-V-1 | 17.0 | |
| CCP-V2-1 | 6.0 | V₀ (1 kHz, 20 °C) = 1.7 V |
| BCH-32 | 3.0 | |
| ∑ | 100.0 | |

The display shows excellent contrast and a fast response time.

### Example 2

An IPS-display is prepared containing a nematic liquid crystal mixture having the following composition and physical properties

| Compound Abbreviation | Conc. /% | Physical Properties |
|---|---|---|
| CC-5-V | 11.0 | T(N,I) = 69.5 °C |
| CC-3-V | 18.5 | T(S,N) < -30 °C |
| CC-3-V1 | 10.0 | nₑ(589 nm, 20 °C) = 1.5815 |
| PCH-3 | 11.0 | Δn (589 nm, 20 °C) = 0.0957 |
| CCP-V-1 | 18.0 | ε_{⊥} (1 kHz, 20 °C) = 4.6 |
| ME2N.F | 5.0 | Δε (1 kHz, 20 °C) = 11.8 |
| ME3N.F | 5.0 | γ₁ (20°C) = 74 mPa·s |
| ME4N.F | 11.0 | |
| CP-30CF3 | 8.0 | V₀ (1 kHz, 20 °C) = 0.86 V |
| CDU-3-F | 2.5 | |
| ∑ | 100.0 | |

The display shows excellent contrast and a fast response time.

### Example 3

An IPS-display is prepared containing a nematic liquid crystal mixture having the following composition and physical properties

| Compound Abbreviation | Conc. /% | Physical Properties |
|---|---|---|
| CC-5-V | 8.5 | T(N,I) = 70.0 °C |
| CC-3-V | 23.0 | T(S,N) < -30 °C |
| CC-3-V1 | 10.0 | nₑ(589 nm, 20 °C) = 1.5850 |
| PCH-3 | 14.0 | Δn (589 nm, 20 °C) = 0.0963 |
| CCP-V-1 | 16.0 | ε_{⊥} (1 kHz, 20 °C) = 4.3 |
| ME2N.F | 5.0 | Δε (1 kHz, 20 °C) = 11.7 |
| ME3N.F | 5.0 | γ₁ (20 °C) = 66 mPa·s |
| PZU-V2-N | 8.0 | |
| CVCP-V-1 | 5.5 | V₀ (1 kHz, 20 °C) = 0.88 V |
| CVCP-V-01 | 5.0 | |
| ∑ | 100.0 | |

The display shows excellent contrast and a fast response time.

### Example 4

An IPS-display is prepared containing a nematic liquid crystal mixture having the following composition and physical properties

| Compound Abbreviation | Conc. /% | Physical Properties |
|---|---|---|
| CC-5-V | 19.5 | T(N,I) = 71.0 °C |
| CC-3-V1 | 10.5 | T(S,N) < -30 °C |
| PCH-3O2 | 3.5 | nₑ(589 nm, 20 °C) = 1.5809 |
| PCH-3 | 7.5 | Δn (589 nm, 20 °C) = 0.0946 |
| PCH-3N.F.F | 10.0 | ε_{⊥} (1 kHz, 20 °C) = 4.8 |
| CCP-V-1 | 16.0 | Δε (1 kHz, 20 °C) = 11.8 |
| CCP-V2-1 | 7.0 | k₁ (20 C) = 10.2 pN |
| ME2N.F | 3.0 | k₂ (20 C) = 5.7 pN |
| ME3N.F | 3.0 | k₃ (20 C) = 14.6 pN |
| PZU-V2-N | 9.0 | k₃/k₁ (20 °C) = 1.45 |
| CP-3OCF3 | 6.0 | γ₁ (20°C) = 83 mPa·s |
| CCZU-3-F | 5.0 | |
| ∑ | 100.0 | V₀ (1 kHz, 20 °C) = 0.85 V |

The display shows excellent contrast and a fast response time.

### Example 5

An IPS-display is prepared containing a nematic liquid crystal mixture having the following composition and physical properties

| Compound Abbreviation | Conc. /% | Physical Properties |
|---|---|---|
| CC-3-V | 18.0 | T(N,I) = 69.5 °C |
| CC-3-V1 | 10.0 | T(S,N) < -40 °C |
| CCH-35 | 2.0 | nₑ(589 nm, 20 °C) = 1.5772 |
| CCP-2OCF3 | 8.0 | Δn (589 nm, 20 °C) = 0.0946 |
| CCP-3OCF3 | 7.0 | ε_{⊥} (1 kHz, 20 °C) = 5.6 |
| DU-3-N | 14.0 | Δε (1 kHz, 20 °C) = 12.1 |
| ME2N.F | 3.0 | k₁ (20 C) = 9.8 pN |
| K 9 | 4.0 | k₃ (20 C) = 14.2 pN |
| PDX-3 | 5.5 | k₃/k₁ (20 °C) = 1.45 |
| CGZP-2-OT | 8.5 | γ₁ (20 °C) = 72 mPa·s |
| BCH-32 | 4.0 | |
| CCP-V-1 | 15.0 | V₀ (1 kHz, 20 °C) = 0.83 V |
| CBC-33 | 1.0 | |
| ∑ | 100.0 | |

The display shows excellent contrast and a fast response time.

### Example 6

An IPS-display is prepared containing a nematic liquid crystal mixture having the following composition and physical properties

| Compound Abbreviation | Conc. /% | Physical Properties |
|---|---|---|
| CC-5-V | 10.0 | T(N,I) = 70.0 °C |
| CC-3-V | 18.0 | T(S,N) < -30 °C |
| CC-3-V1 | 10.5 | nₑ(589 nm, 20 °C) = 1.5854 |
| PCH-3 | 11.0 | Δn (589 nm, 20 °C) = 0.0965 |
| DU-3-N | 4.0 | ε_{⊥} (1 kHz, 20 °C) = 4.6 |
| ME2N.F | 4.5 | Δε (1 kHz, 20 °C) = 12.1 |
| ME3N.F | 5.0 | γ₁ (20 °C) = 74 mPa·s |
| ME4N.F | 9.0 | |
| CCP-V-1 | 16.0 | V₀ (1 kHz, 20 °C) = 0.83 V |
| CCP-V2-1 | 12.0 | |
| ∑ | 100.0 | |

The display shows excellent contrast and a fast response time.

### Example 1

An IPS-display is prepared containing a nematic liquid crystal mixture having the following composition and physical properties

| Compound Abbreviation | Conc. /% | Physical Properties |
|---|---|---|
| CC-3-V | 18.0 | T(N,I) = 80.0 °C |
| CC-3-V1 | 11.0 | T(S,N) < -20°C |
| CCP-2OCF3 | 6.0 | nₑ(589 nm, 20°C) = 1.5836 |
| CCP-3OCF3 | 2.0 | Δn (589 nm, 20°C) = 0.1026 |
| CCP-2F.F.F | 6.0 | ε_{⊥} (1 kHz, 20 °C) = 4.0 |
| PGU-2-F | 8.0 | Δε (1 kHz, 20 °C) = 9.7 |
| PGU-3-F | 7.0 | γ₁ (20°C)) = 79 mPa·s |
| CGU-2-F | 3.0 | |
| CGZP-2-OT | 10.0 | V₀ (1 kHz, 20 °C) = 1.15 V |
| CGZP-3-OT | 9.0 | |
| CCZU-2-F | 3.0 | |
| CCZU-3-F | 14.0 | |
| BCH-32 | 3.0 | |
| ∑ | 100.0 | |

The display shows excellent contrast and a fast response time.

### Example 2

An IPS-display is prepared containing a nematic liquid crystal mixture having the following composition and physical properties

| Compound Abbreviation | Conc. /% | Physical Properties |
|---|---|---|
| CC-3-V | 18.0 | T(N,I) = 80.0 °C |
| CC-3-V1 | 11.0 | nₑ(589 nm, 20 °C) = 1.5884 |
| CC-5-V | 5.0 | Δn (589 nm, 20 °C) = 0.1036 |
| PGU-2-F | 8.0 | ε_{⊥} (1 kHz, 20 °C) = 3.5 |
| PGU-3-F | 8.0 | Δε (1 kHz, 20 °C) = 7.8 |
| BCH-3F.F.F | 5.0 | γ₁ (20°C)) = 74 mPa·s |
| CGZP-2-OT | 9.0 | |
| CCZU-2-F | 3.0 | V₀ (1 kHz, 20 °C) = 1.29 V |
| CCZU-3-F | 10.0 | |
| CCP-V-1 | 8.0 | |
| CGZP-3-F | 9.0 | |
| BCH-32 | 4.0 | |
| ∑ | 100.0 | |

The display shows excellent contrast and a fast response time.

## Claims

1. Electro-optical liquid crystal display, containing a liquid crystalline medium with positive dielectric anisotropy, having an electrode structure for the reorientation of the liquid crystalline medium which generates an electrical field with a component parallel to the liquid crystal layer which is sufficient to affect the switching of the liquid crystalline medium essentially in the plane of the liquid crystal layer, **characterized in that** the liquid crystalline medium contains two or more compounds of formula I 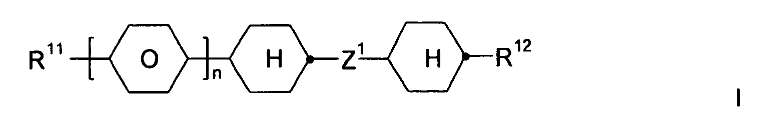 wherein
R¹¹ is alkyl or alkoxy with 1 to 7 C-atoms or alkoxyalkyl with 2 to 7 C-atoms,
R12 is alkenyl or alkenyloxy with 2 to 7 C-atoms,
Z¹ is -CH₂-CH₂- or a single bond and
n is 0 or 1 and
one or more compounds of formula IVb10 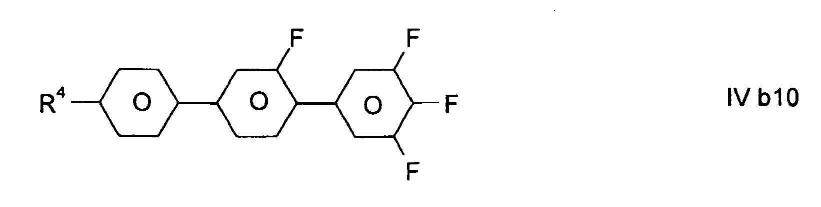 wherein
R⁴ is alkyl with 1 to 7 C atoms.

2. Display according to claim 1, **characterized in that** it contains a liquid crystalline medium containing one or more compounds of formula II 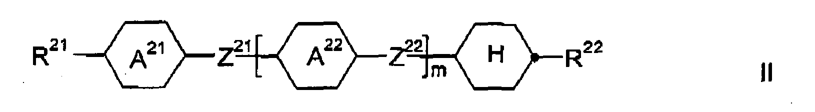 wherein
R²¹ is alkyl or alkoxy with 1 to 7 C atoms or alkenyl, alkenyloxy or alkoxyalkyl with 2 to 7 C atoms,
R²² is alkyl with 1 to 7 C atoms or alkenyl with 2 to 7 C atoms,
Z²¹ and Z²² when present, are, independently of each other -COO-, -OCO-, -CF₂-O-, -O-CF₂-, -CH₂-CH₂-, -CH=CH-, -CF=CF-, -CF=CH-, -CH=CF- or a single bond, preferably a single bond, 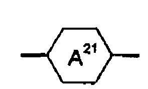
and 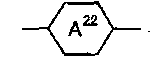 when present, are, independently of each other, 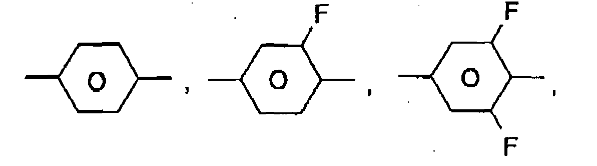 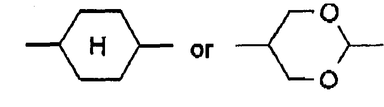 and
n is 0, 1 or 2,
with the condition, that compounds of formula I are excluded from those of formula II.

3. Display according to at least one of claims 1 and 2, **characterized in that** it contains a liquid crystalline medium containing one or more compounds selected from the group of formulae Ia and Ib 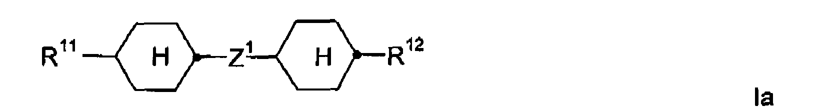 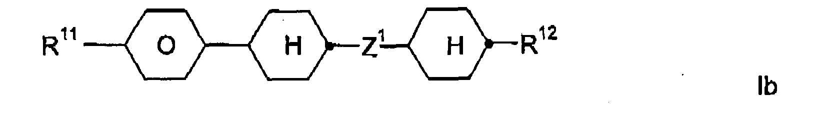 wherein the parameters have the meanigs given in claim 1.

4. Display according to claim 3, **characterized in that** it contains a liquid crystalline medium containing one or more compounds of formula Ia 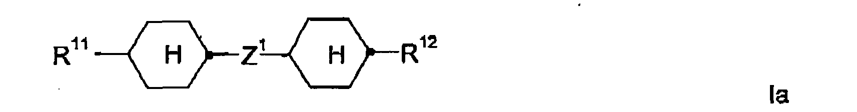 wherein the parameters have the meanigs given in claim 1.

5. Display according to at least one of claims 3 and 4, **characterized in that** it contains a liquid crystalline medium containing one or more compounds of formula Ib 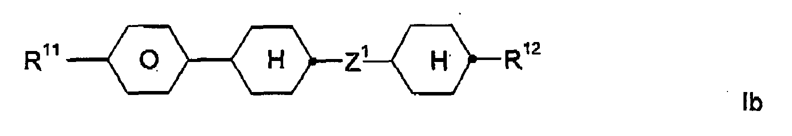 wherein the parameters have the meanigs given in claim 1.

6. Display according to at least one of claims 2 to 5, **characterized in that** it contains a liquid crystalline medium containing one or more compounds of formula IIb1 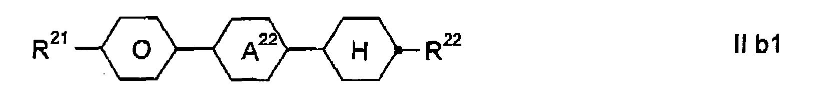 wherein
R²¹ is n-alkyl with 1 to 7 C atoms,
R²² is n-alkyl with 3 to 5 C atoms and

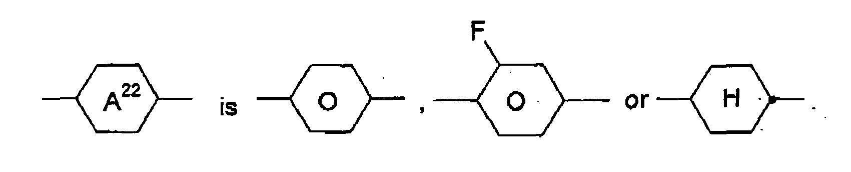

7. Display according to at least one of claims 1 to 6, **characterized in that** it contains a liquid crystalline medium containing one or more compounds of formula III 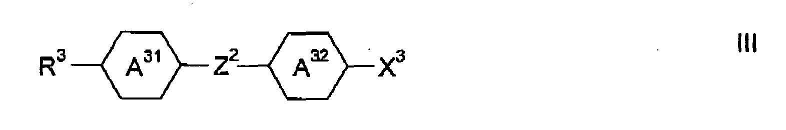 wherein
R³ is alkyl or alkoxy with 1 to 7 C atoms or alkenyl, alkenyloxy or alkoxyalkyl with 2 bis 7 C atoms, 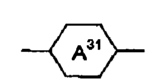
and 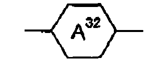 each independently of one another are 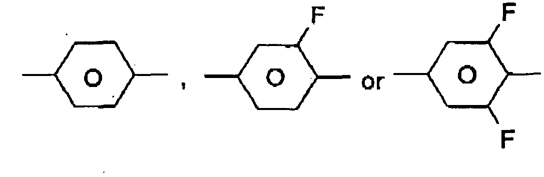 and 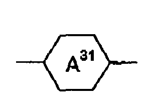 may also be 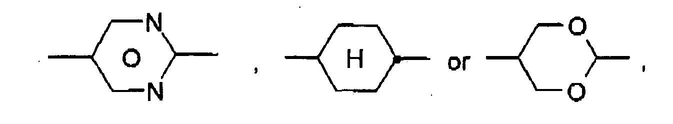
Z³ is -CH₂-CH₂, -COO-, -CF₂O- or a single bond and
X³ is F, Cl, CN or NCS.

8. Display according to at least one of claims 1 to 7, **characterized in that** it contains a liquid crystalline medium containing one or more compounds of formula IIIs 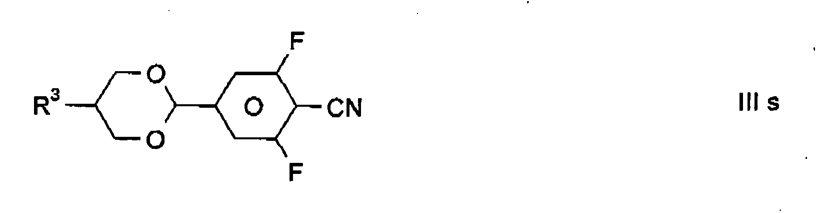 wherein R³ has the meaning given in claim 3.

9. Display according to at least one of claims 1 to 8, **characterized in that** it contains a liquid crystalline medium containing one or more compounds of formula IV selected from the group of formulae IVa1 to IVa6, IVb1 to IVb9, IVb11, IVc1 to IVc5, IVd1 and IVd2 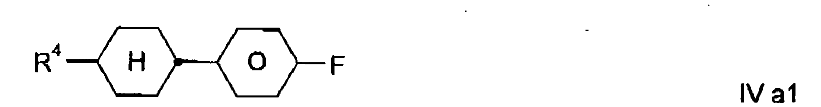 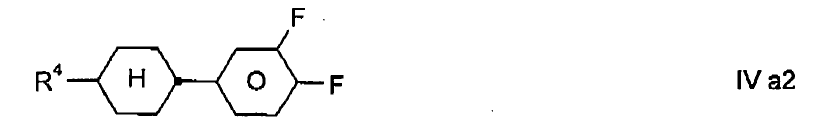 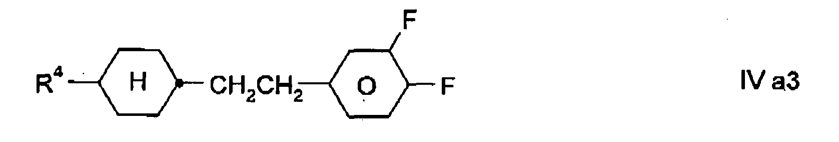 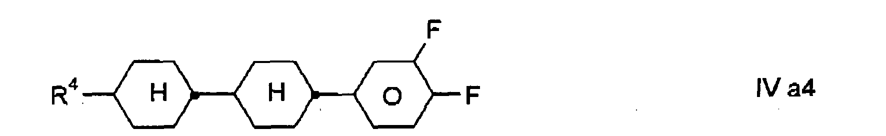 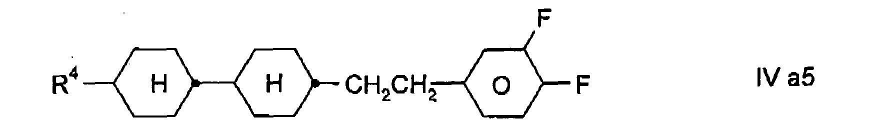 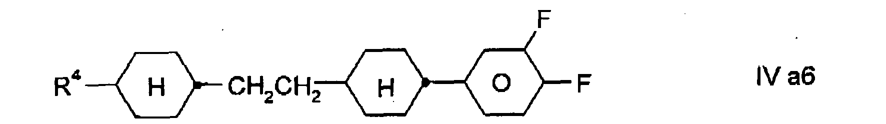 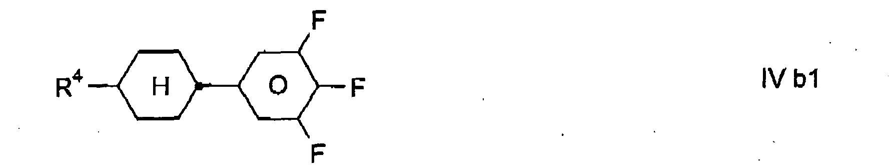 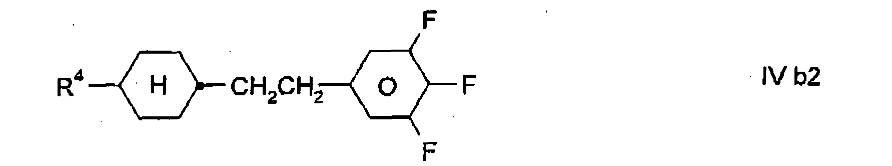 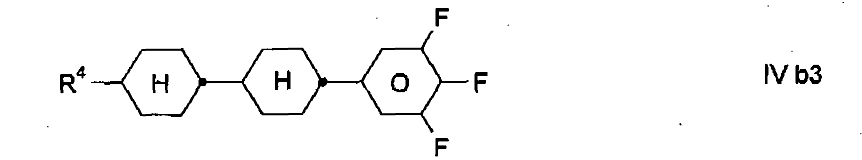 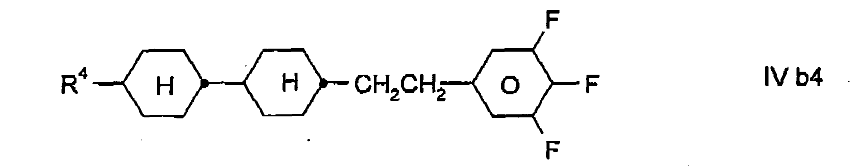 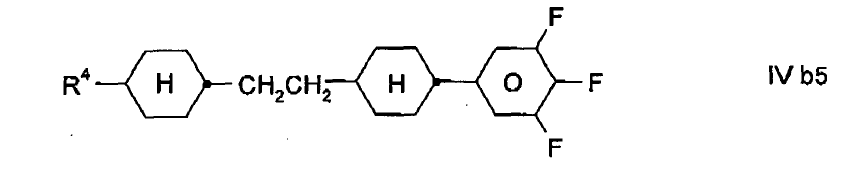 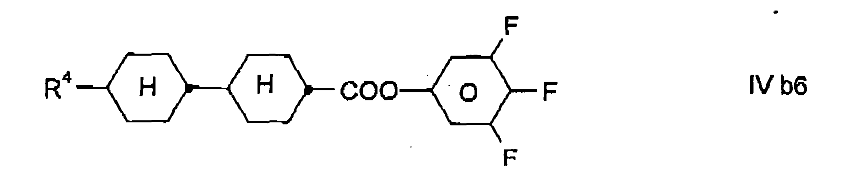 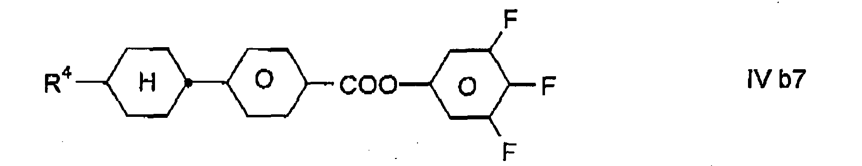 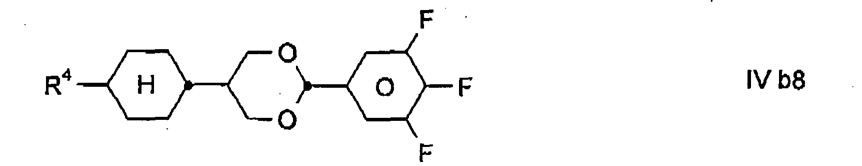 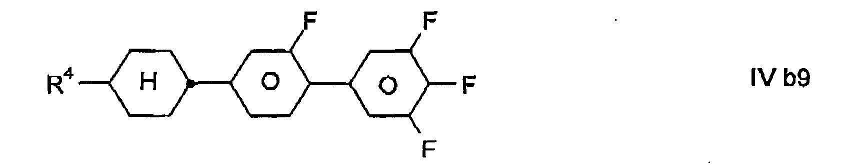 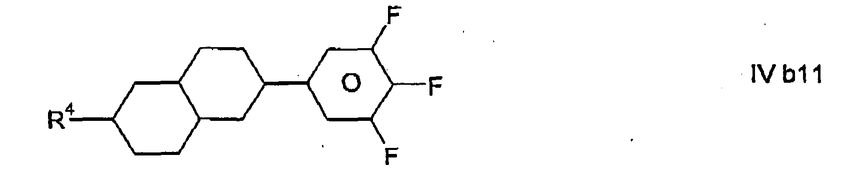 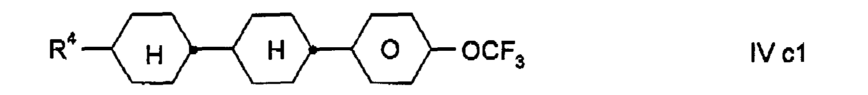 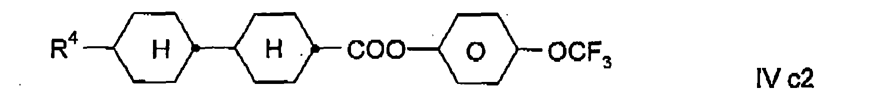 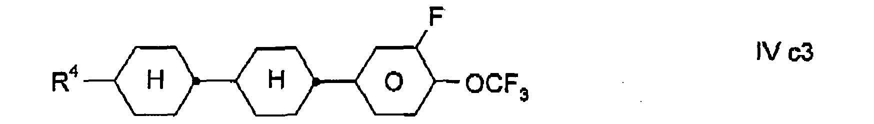 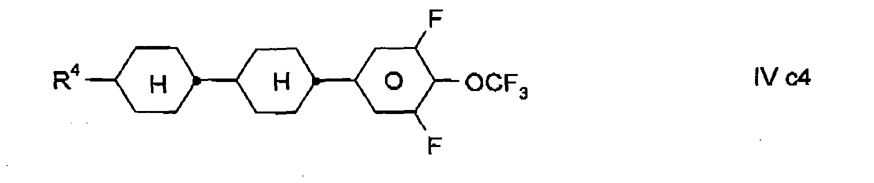 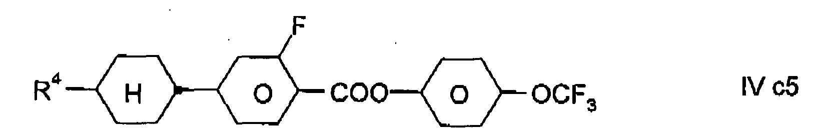 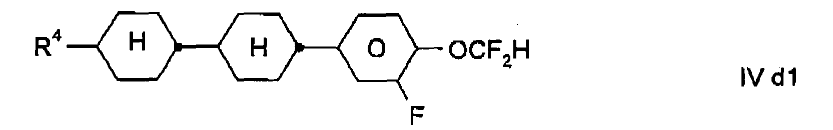 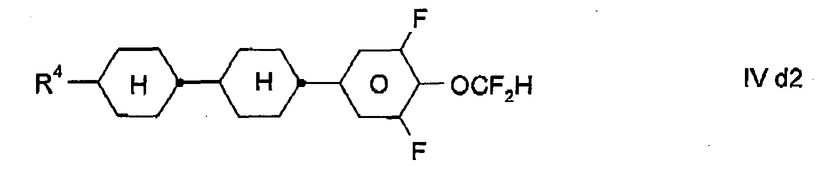 wherein R⁴ has the meaning given in claim 1.

10. Display according to at least one of claims 1 to 9, **characterized in that** it contains a liquid crystalline medium containing one or more compounds of formula V 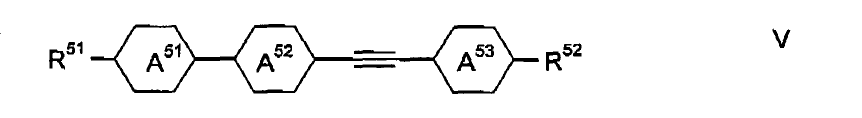 wherein
R⁵¹ and R⁵² each independently of one another are alkyl or alkoxy with 1 to 7 C atoms or alkoxyalkyl with 2 to 7 C atoms, and R⁵² may also be F or OCF₃, 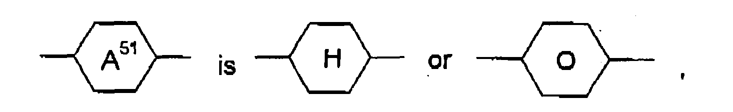 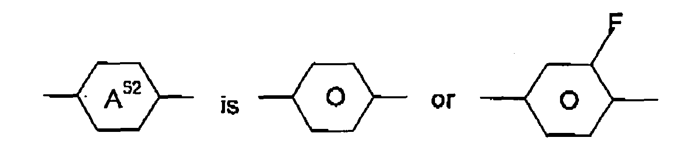 and

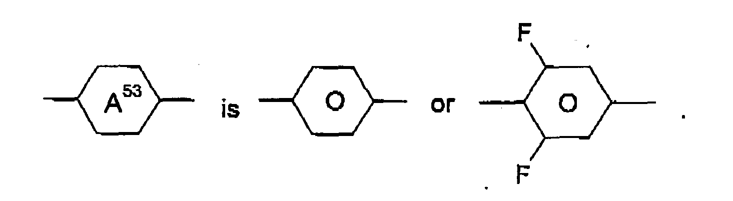

11. Display according to at least one of claims 1 to 10, **characterized in that** it contains a liquid crystalline medium that contains
- 25 to 82 % of two or more compounds of formula I,
- 1 to 45 % of one or more compounds of formula II,
- 5 to 50 % of one or more compounds of formula III and
- 10 bis 50 % of one or more compounds selected from the group of formulae IVa1 to IV a6, IV b1 to IV b11, IV c1 to IV c5, IV d1 and IV d2.

12. Liquid crystal display according to at least one of claims 1 to 11. **characterized in that** it is addressed by a matrix of non-linear electrical switching elements.

13. Liquid crystalline medium having a dielectrically positive dielectric anisitropy charactreized in that it has the composition specified in at least one of claims 1 to 11.

14. Use of a medium according to claim 13 in a liquid crystal display.

## Patentansprüche

1. Elektrooptische Flüssigkristallanzeige, die ein flüssigkristallines Medium mit positiver dielektrischer Anisotropie enthält, mit einer Elektrodenstruktur zur Umorientierung des flüssigkristallinen Mediums, welche ein elektrisches Feld mit einer Komponente parallel zur Flüssigkristallschicht erzeugt, welches ausreicht, um das Umschalten des flüssigkristallinen Mediums im Wesentlichen in der Ebene der Flüssigkristallschicht zu bewirken, **dadurch gekennzeichnet, dass** das flüssigkristalline Medium zwei oder mehr Verbindungen der Formel I 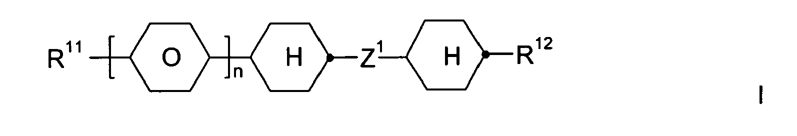 in der
R¹¹ Alkyl oder Alkoxy mit 1 bis 7 C-Atomen oder Alkoxyalkyl mit 2 bis 7 C-Atomen bedeutet,
R¹² Alkenyl oder Alkenyloxy mit 2 bis 7 C-Atomen bedeutet,
Z¹ -CH₂-CH₂- oder eine Einfachbindung bedeutet und
n für 0 oder 1 steht, und
eine oder mehrere Verbindungen der Formel IVb10 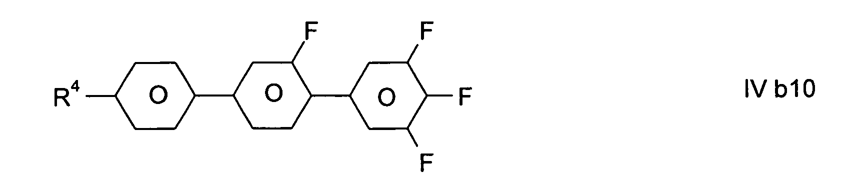 in der
R⁴ Alkyl mit 1 bis 7 C-Atomen bedeutet,
enthält.

2. Anzeige nach Anspruch 1, **dadurch gekennzeichnet, dass** sie ein flüssigkristallines Medium enthält, das eine oder mehrere Verbindungen der Formel II 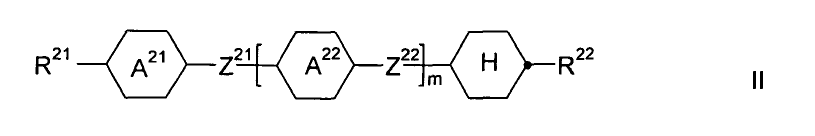 enthält, in der
R²¹ Alkyl oder Alkoxy mit 1 bis 7 C-Atomen oder Alkenyl, Alkenyl- oxy oder Alkoxyalkyl mit 2 bis 7 C-Atomen bedeutet,
R²² Alkyl mit 1 bis 7 C-Atomen oder Alkenyl mit 2 bis 7 C-Atomen bedeutet,
Z²¹ und Z²², wenn vorhanden, unabhängig voneinander -COO-, -OCO-, -CF₂-O-, -O-CF₂-, -CH₂-CH₂-, -CH=CH-, -CF=CF-, -CF=CH-, -CH=CF- oder eine Einfachbindung, vorzugsweise eine Einfachbindung bedeuten, 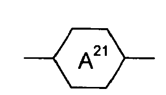
und 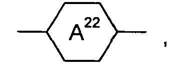 wenn vorhanden, unabhängig voneinander 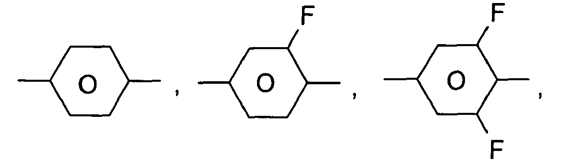 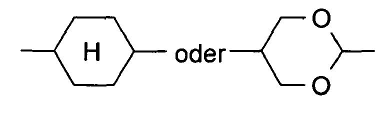 bedeuten und
n für 0, 1 oder 2 steht,
mit der Maßgabe, dass Verbindungen der Formel I von denen der Formel II ausgenommen sind.

3. Anzeige nach mindestens einem der Ansprüche 1 und 2, **dadurch gekennzeichnet, dass** sie ein flüssigkristallines Medium enthält, das eine oder mehrere Verbindungen enthält, die aus der Gruppe der Formeln Ia und Ib ausgewählt sind: 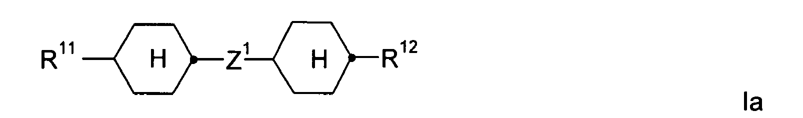 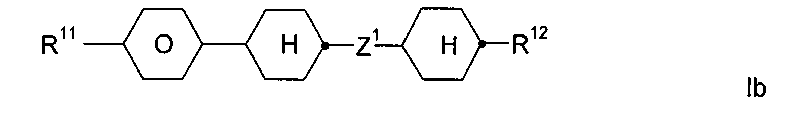 in denen die Parameter die in Anspruch 1 angegebenen Bedeutungen besitzen.

4. Anzeige nach Anspruch 3, **dadurch gekennzeichnet, dass** sie ein flüssigkristallines Medium enthält, das eine oder mehrere Verbindungen der Formel Ia 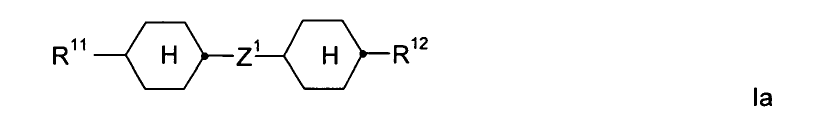 enthält, in der die Parameter die in Anspruch 1 angegebenen Bedeutungen besitzen.

5. Anzeige nach mindestens einem der Ansprüche 3 und 4, **dadurch gekennzeichnet, dass** sie ein flüssigkristallines Medium enthält, das eine oder mehrere Verbindungen der Formel Ib 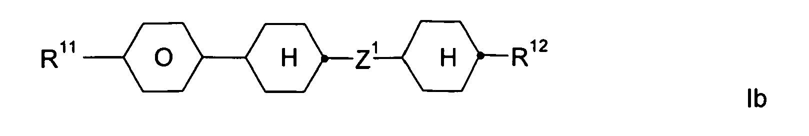 enthält, in der die Parameter die in Anspruch 1 angegebenen Bedeutungen besitzen.

6. Anzeige nach mindestens einem der Ansprüche 2 bis 5, **dadurch gekennzeichnet, dass** sie ein flüssigkristallines Medium enthält, das eine oder mehrere Verbindungen der Formel IIb1 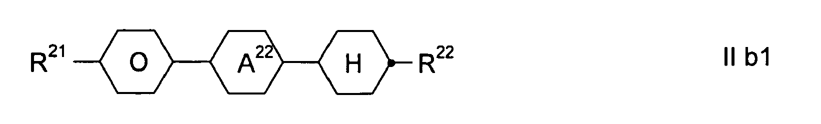 enthält, in der
R²¹ n-Alkyl mit 1 bis 7 C-Atomen bedeutet,
R²² n-Alkyl mit 3 bis 5 C-Atomen bedeutet und 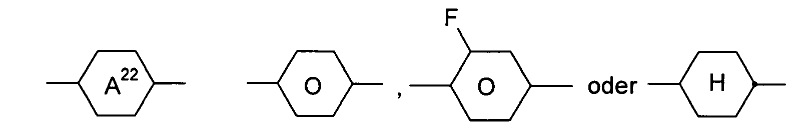
bedeutet.

7. Anzeige nach mindestens einem der Ansprüche 1 bis 6, **dadurch gekennzeichnet, dass** sie ein flüssigkristallines Medium enthält, das eine oder mehrere Verbindungen der Formel III 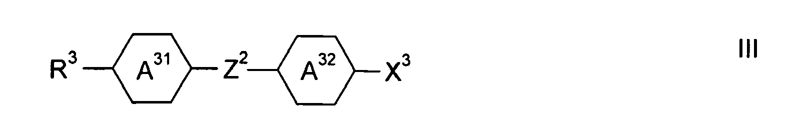 enthält, in der
R³ Alkyl oder Alkoxy mit 1 bis 7 C-Atomen oder Alkenyl, Alkenyloxy oder Alkoxyalkyl mit 2 bis 7 C-Atomen bedeutet, 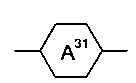
und 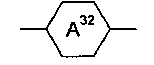 jeweils unabhängig voneinander 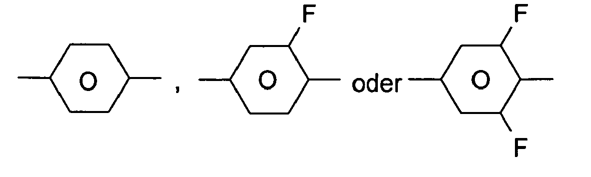 bedeuten und 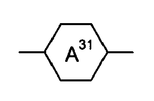 auch 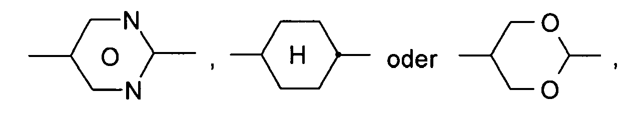 bedeuten kann,
Z³ -CH₂-CH₂, -COO-, -CF₂O- oder eine Einfachbindung bedeutet und
X³ F, Cl, CN oder NCS bedeutet.

8. Anzeige nach mindestens einem der Ansprüche 1 bis 7, **dadurch gekennzeichnet, dass** sie ein flüssigkristallines Medium enthält, das eine oder mehrere Verbindungen der Formel IIIs 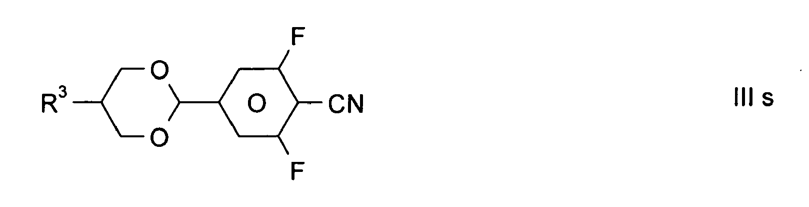 enthält, in der R³ die in Anspruch 3 angegebene Bedeutung besitzt.

9. Anzeige nach mindestens einem der Ansprüche 1 bis 8, **dadurch gekennzeichnet, dass** sie ein flüssigkristallines Medium enthält, das eine oder mehrere Verbindungen der Formel IV enthält, die aus der Gruppe der Formeln IVa1 bis IVa6, IVb1 bis IVb9, IVb11, IVc1 bis IVc5, IVd1 und IVd2 ausgewählt sind: 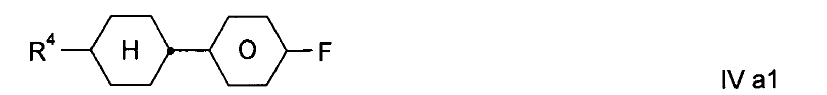 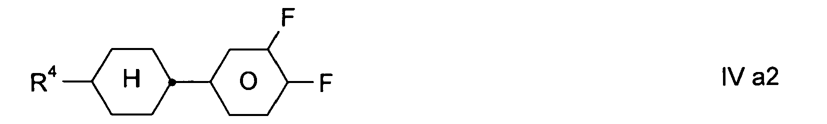 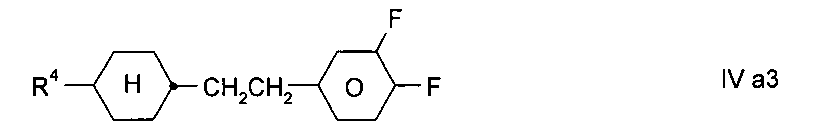 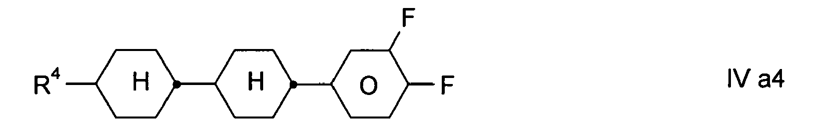 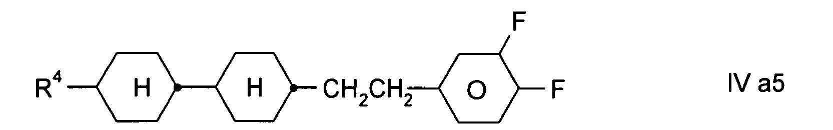 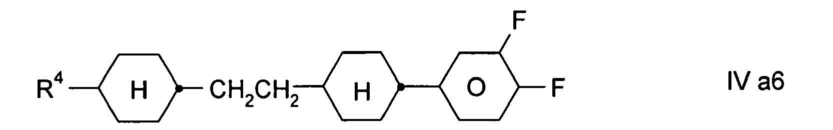 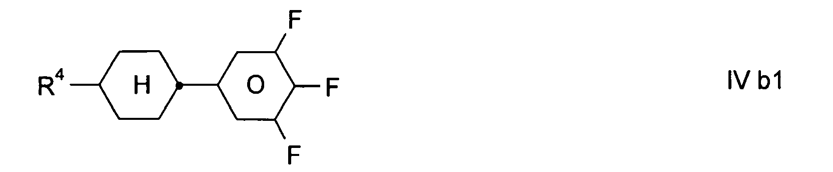 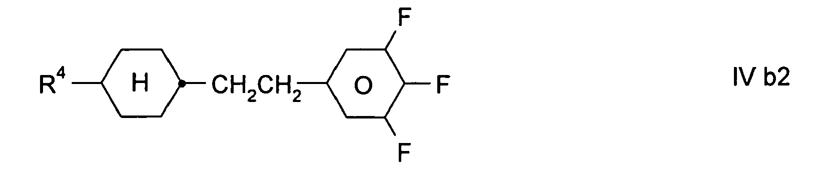 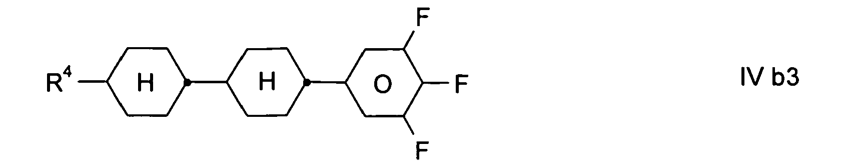 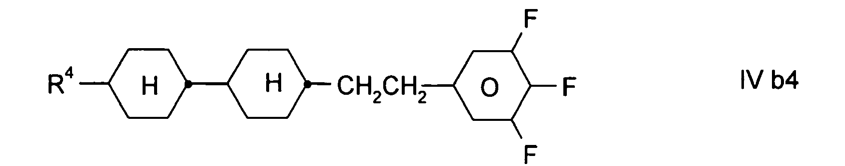 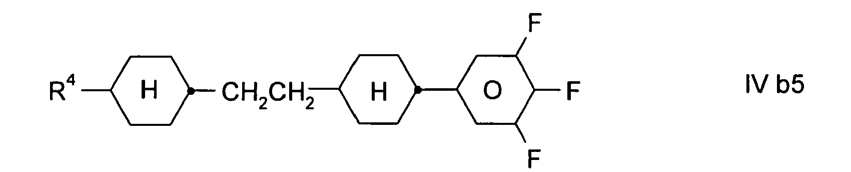 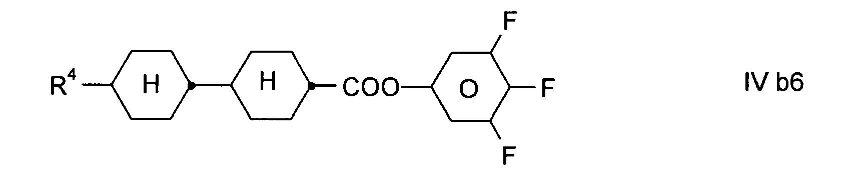 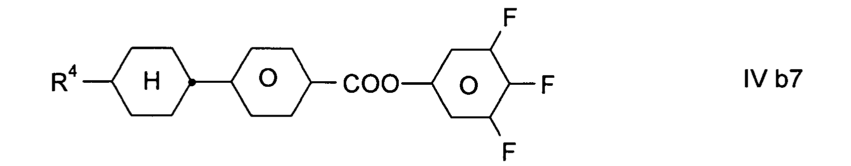 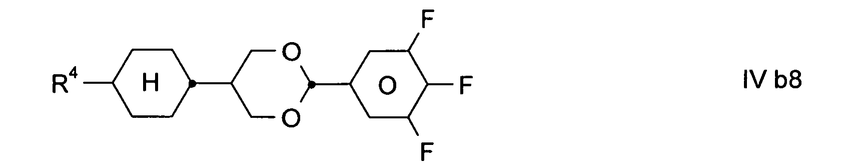 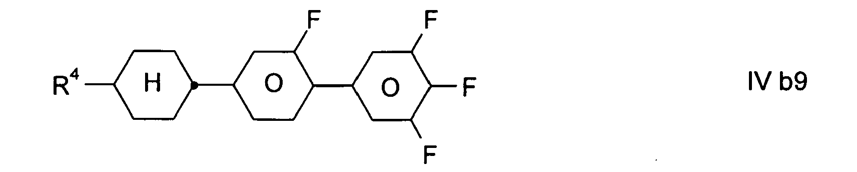 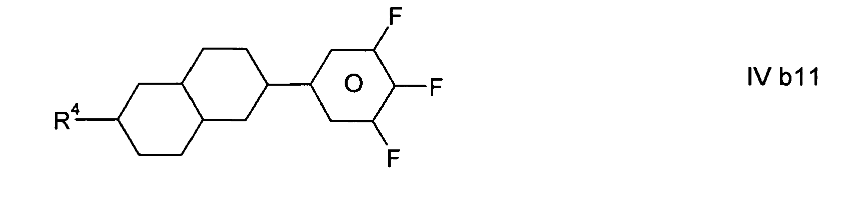 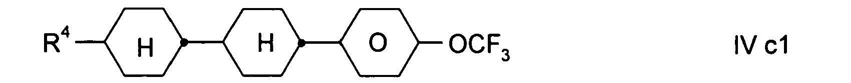 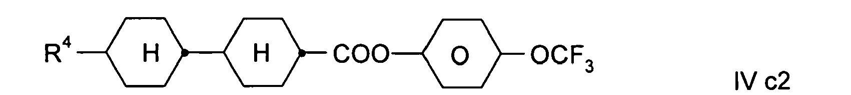 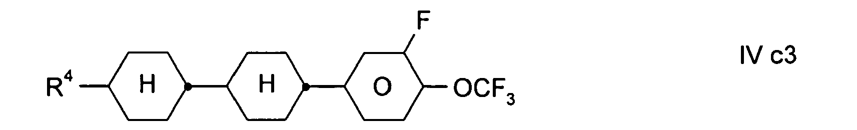 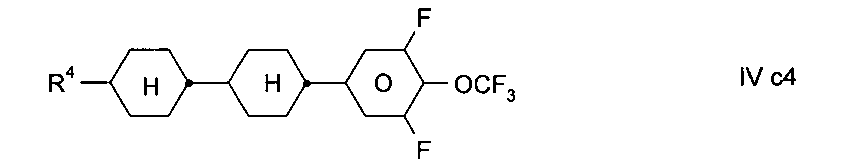 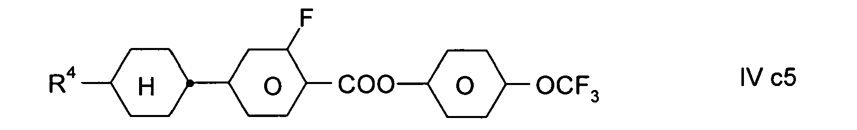 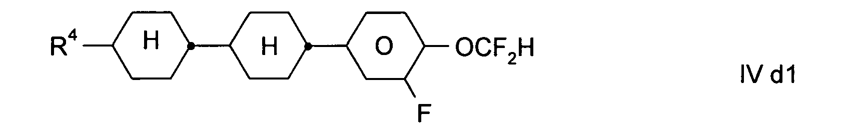 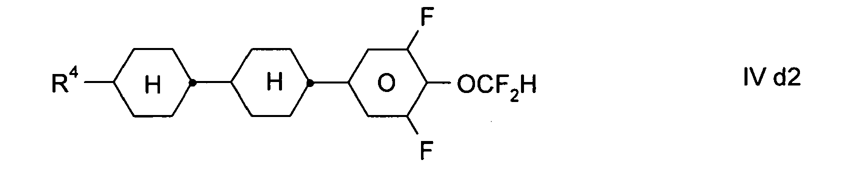 in denen R⁴ die in Anspruch 1 angegebene Bedeutung besitzt.

10. Anzeige nach mindestens einem der Ansprüche 1 bis 9, **dadurch gekennzeichnet, dass** sie ein flüssigkristallines Medium enthält, das eine oder mehrere Verbindungen der Formel V 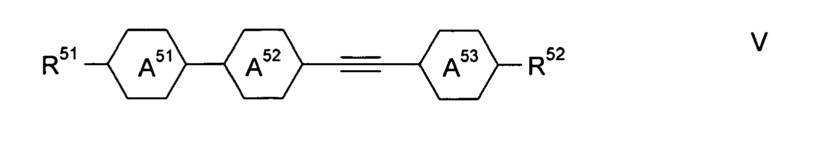 enthält, in der
R⁵¹ und R⁵² jeweils unabhängig voneinander Alkyl oder Alkoxy mit 1 bis 7 C-Atomen oder Alkoxyalkyl mit 2 bis 7 C-Atomen bedeuten und R⁵² auch F oder OCF₃ bedeuten kann, 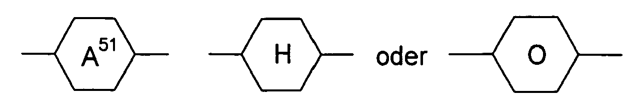
bedeutet, 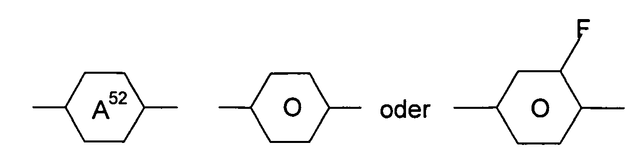 bedeutet und 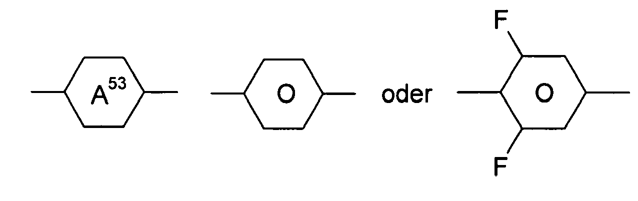 bedeutet.

11. Anzeige nach mindestens einem der Ansprüche 1 bis 10, **dadurch gekennzeichnet, dass** sie ein flüssigkristallines Medium enthält, das
- 25 bis 82% von zwei oder mehr Verbindungen der Formel I,
- 1 bis 45% von einer oder mehreren Verbindungen der Formel II,
- 5 bis 50% von einer oder mehreren Verbindungen der Formel III und
- 10 bis 50% von einer oder mehreren Verbindungen, die aus der Gruppe der Formeln IV a1 bis IV a6, IV b1 bis IV b11, IV c1 bis IV c5, IV d1 und IV d2 ausgewählt sind,
enthält.

12. Flüssigkristallanzeige nach mindestens einem der Ansprüche 1 bis 11, **dadurch gekennzeichnet, dass** sie durch eine Matrix von nichtlinearen elektrischen Schaltelementen angesprochen wird.

13. Flüssigkristallines Medium mit dielektrisch positiver dielektrischer Anisotropie, **dadurch gekennzeichnet, dass** es die in mindestens einem der Ansprüche 1 bis 11 angegebene Zusammensetzung aufweist.

14. Verwendung eines Mediums nach Anspruch 13 in einer Flüssigkristallanzeige.

## Revendications

1. Affichage à cristaux liquides électro-optique, contenant un milieu cristallin liquide présentant une anisotropie diélectrique positive, comportant une structure d'électrode pour la réorientation du milieu cristallin liquide, laquelle génère un champ électrique présentant une composante parallèle à la couche de cristaux liquides, laquelle suffit pour affecter la commutation du milieu cristallin liquide essentiellement dans le plan de la couche de cristaux liquides, **caractérisé en ce que** le milieu cristallin liquide contient deux composés ou plus de la formule I 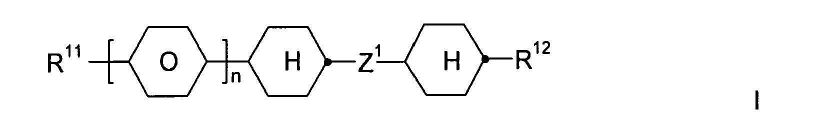 dans laquelle
R¹¹ est alkyle ou alcoxy avec de 1 à 7 atomes de C ou alcoxy- alkyle avec de 2 à 7 atomes de C,
R¹² est alkényle ou alkényloxy avec de 2 à 7 atomes de C,
Z¹ est -CH₂-CH₂- ou une liaison simple et
n est 0 ou 1 et
un ou plusieurs composés de la formule IVb10 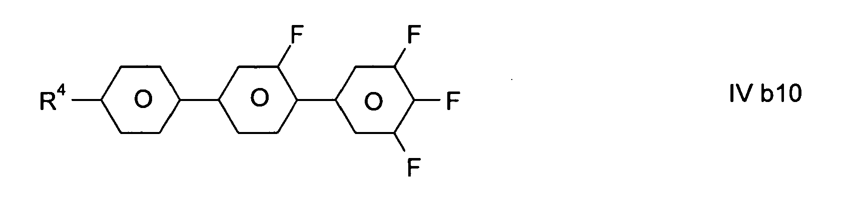 dans laquelle
R⁴ est alkyle avec de 1 à 7 atomes de C.

2. Affichage selon la revendication 1, **caractérisé en ce qu'**il contient un milieu cristallin liquide contenant un ou plusieurs composés de la formule II 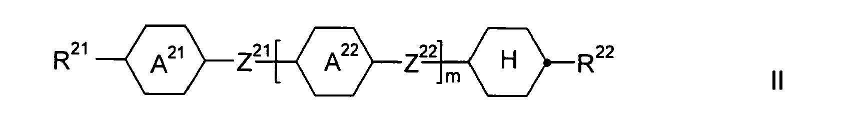 dans laquelle
R²¹ est alkyle ou alcoxy avec de 1 à 7 atomes de C ou alkényle, alkényloxy ou alcoxyalkyle avec de 2 à 7 atomes de C,
R²² est alkyle avec de 1 à 7 atomes de C ou alkényle avec de 2 à 7 atomes de C,
Z²¹ et Z²² lorsqu'ils sont présents, sont, indépendamment l'un de l'autre, -COO-, -OCO-, -CF₂-O-, -O-CF₂-, -CH₂-CH₂-, -CH=CH-, -CF=CF-, -CF=CH-, -CH=CF- ou une liaison simple, de préférence une liaison simple, 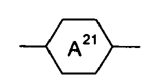
et 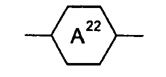 lorsqu'ils sont présents, sont, indépendamment l'un de l'autre, 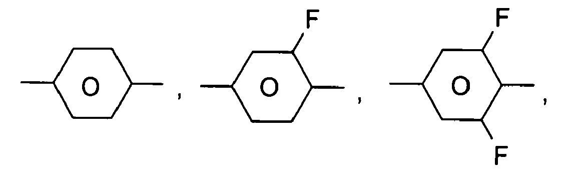 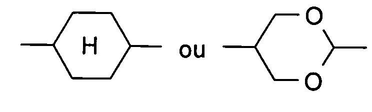 et
n est 0, 1 ou 2,
avec pour condition que des composés de la formule I sont exclus de ceux de la formule II.

3. Affichage selon au moins l'une des revendications 1 et 2, **caractérisé en ce qu'**il contient un milieu cristallin liquide contenant un ou plusieurs composés choisis parmi le groupe des formules la et Ib 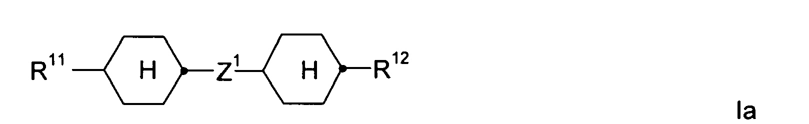 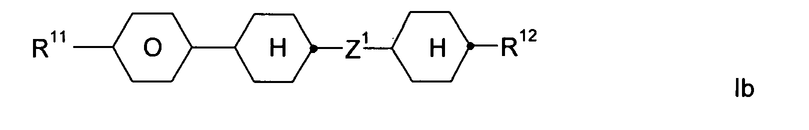 dans lesquelles les paramètres présentent les significations données dans la revendication 1.

4. Affichage selon la revendication 3, **caractérisé en ce qu'**il contient un milieu cristallin liquide contenant un ou plusieurs composés de la formule la 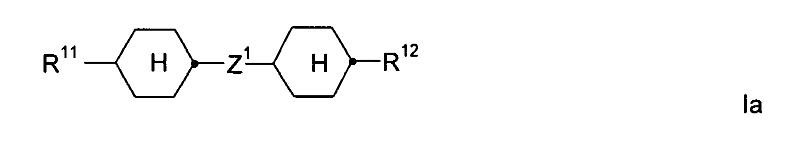 dans laquelle les paramètres présentent les significations données dans la revendication 1.

5. Affichage selon au moins l'une des revendications 3 et 4, **caractérisé en ce qu'**il contient un milieu cristallin liquide contenant un ou plusieurs composés de la formule Ib 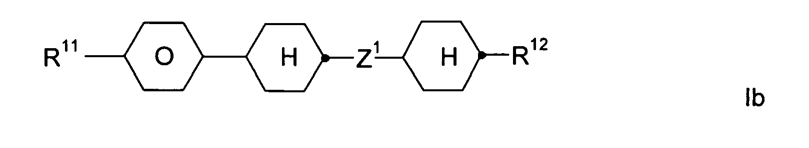 dans laquelle les paramètres présentent les significations données dans la revendication 1.

6. Affichage selon au moins l'une des revendications 2 à 5, **caractérisé en ce qu'**il contient un milieu cristallin liquide contenant un ou plusieurs composés de la formule IIb1 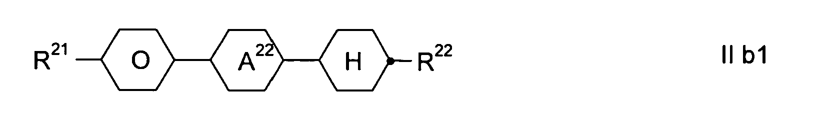 dans laquelle
R²¹ est n-alkyle avec de 1 à 7 atomes de C,
R²² est n-alkyle avec de 3 à 5 atomes de C et

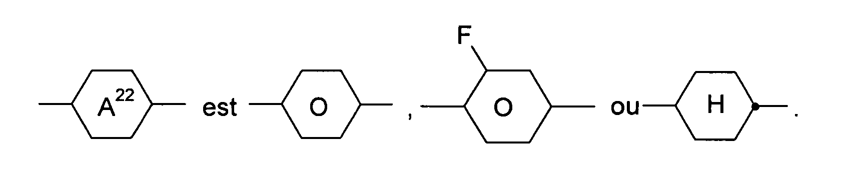

7. Affichage selon au moins l'une des revendications 1 à 6, **caractérisé en ce qu'**il contient un milieu cristallin liquide contenant un ou plusieurs composés de la formule III 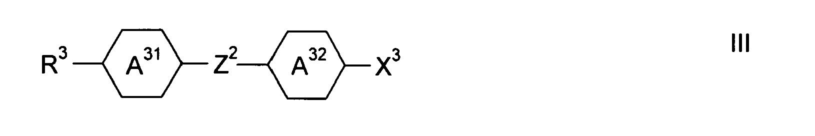 dans laquelle
R³ est alkyle ou alcoxy avec de 1 à 7 atomes de C ou alkényle, alkényloxy ou alcoxyalkyle avec de 2 à 7 atomes de C, 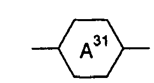
et 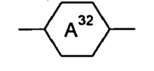 sont, chacun indépendamment de l'autre, 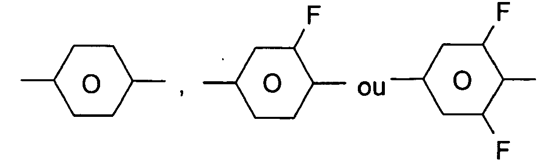 et 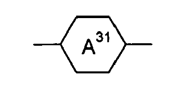 peut également être 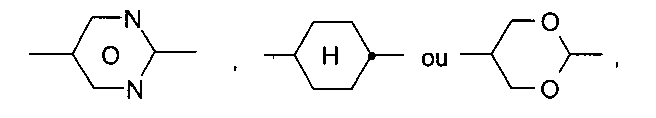
Z³ est -CH₂-CH₂, -COO-, -CF₂O- ou une liaison simple et
X³ est F, CI, CN ou NCS.

8. Affichage selon au moins l'une des revendications 1 à 7, **caractérisé en ce qu'**il contient un milieu cristallin liquide contenant un ou plusieurs composés de la formule IIIs 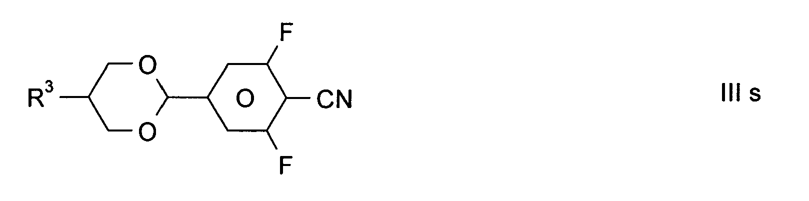 dans laquelle R³ présente la signification donnée dans la revendication 3.

9. Affichage selon au moins l'une des revendications 1 à 8, **caractérisé en ce qu'**il contient un milieu cristallin liquide contenant un ou plusieurs composés de la formule IV choisis parmi le groupe de formules IVa1 à IVa6, IVb1 à IVb9, IVb11, IVc1 à IVc5, IVd1 et IVd2 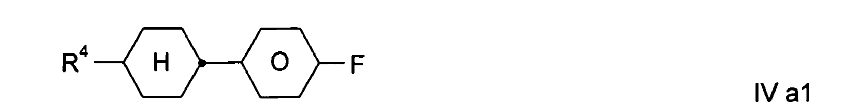 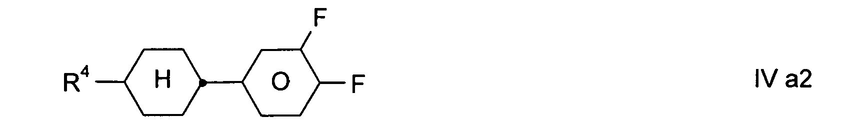 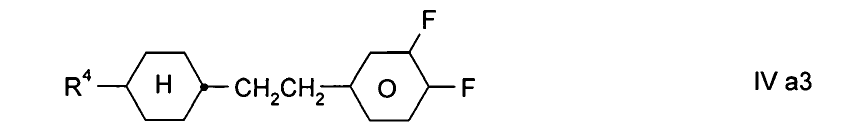 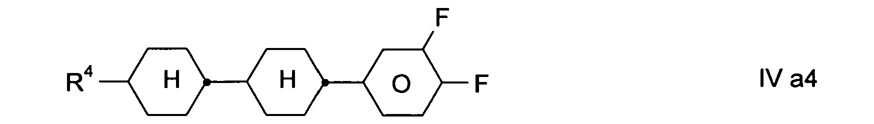 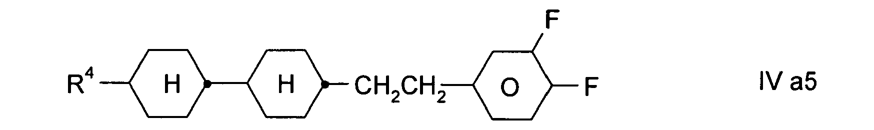 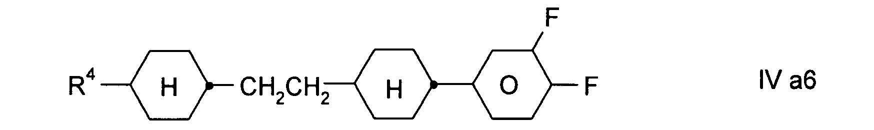 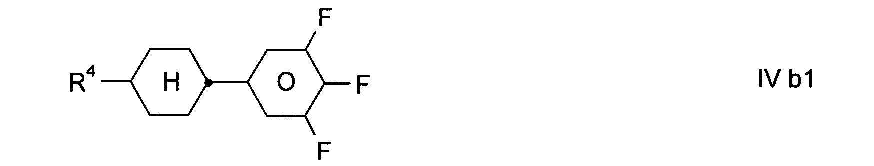 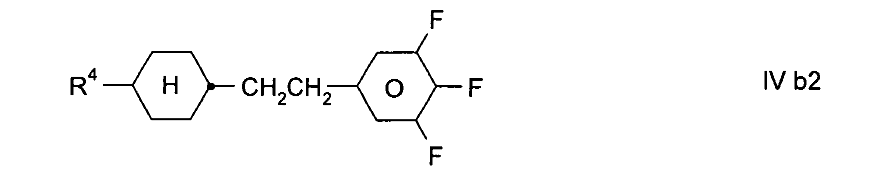 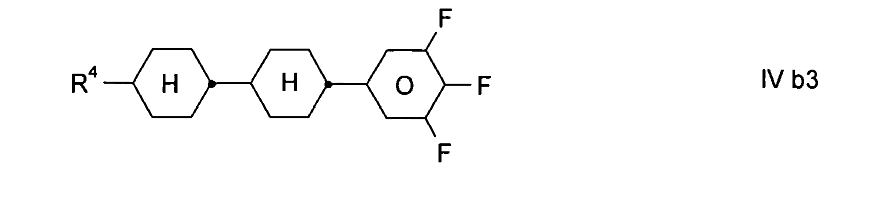 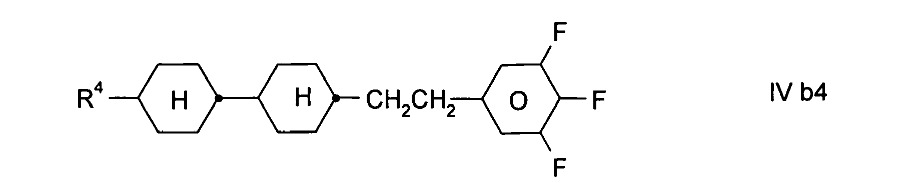 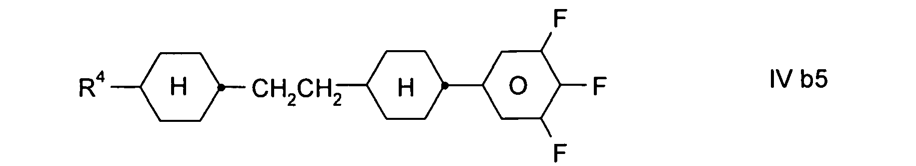 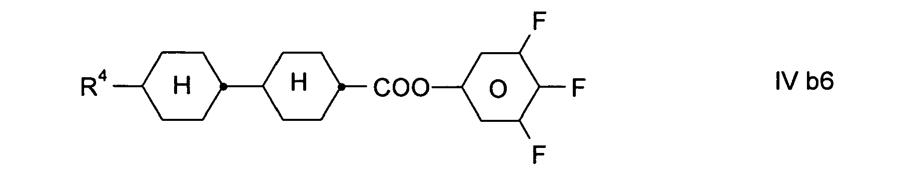 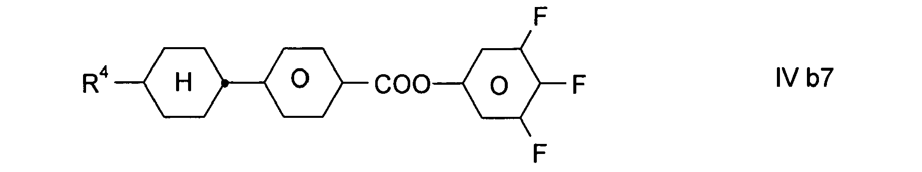 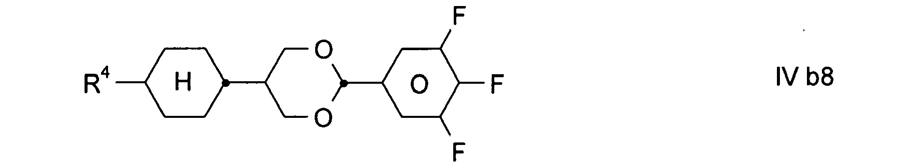 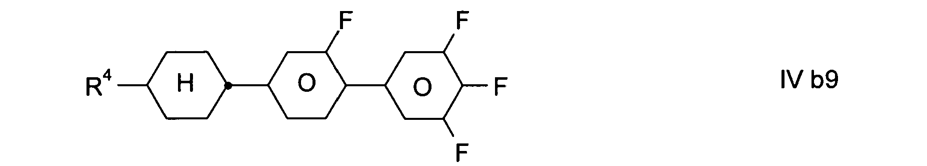 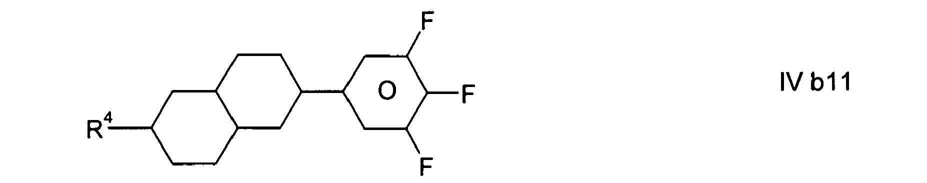 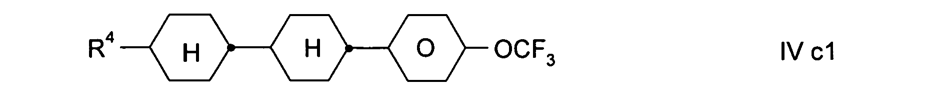 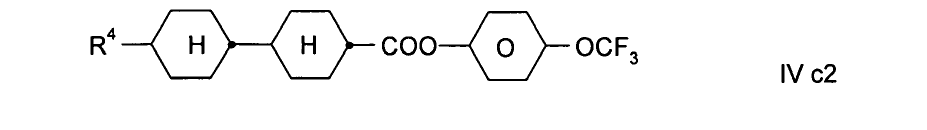 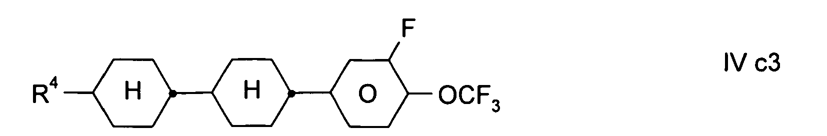 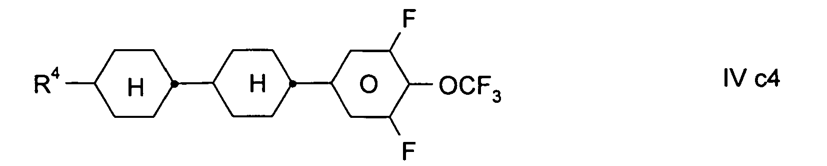 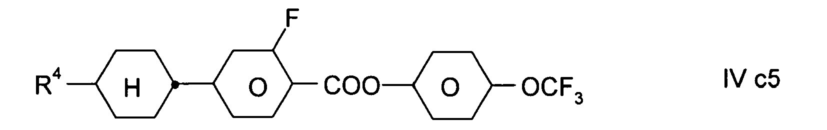 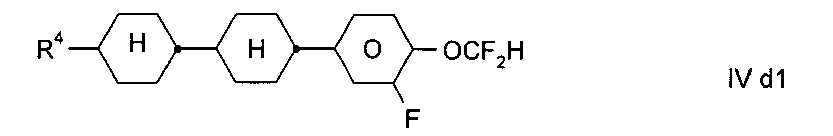 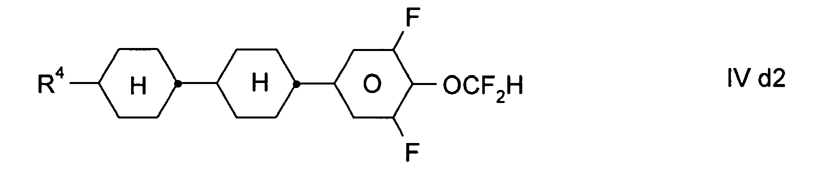 où R⁴ présente la signification donnée dans la revendication 1.

10. Affichage selon au moins l'une des revendications 1 à 9, **caractérisé en ce qu'**il contient un milieu cristallin liquide contenant un ou plusieurs composés de la formule V 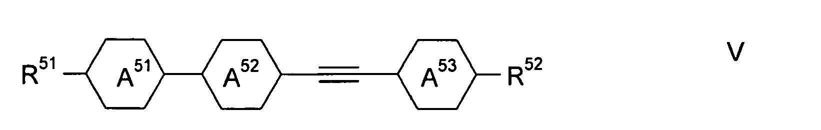 dans laquelle
R⁵¹ et R⁵² sont, chacun indépendamment de l'autre, alkyle ou alcoxy avec de 1 à 7 atomes de C ou alcoxyalkyle avec de 2 à 7 atomes de C, et R⁵² peut également être F ou OCF₃, 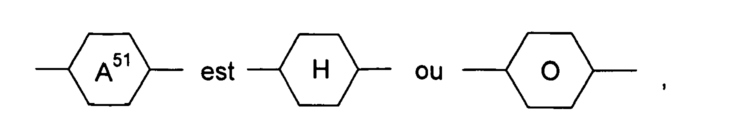 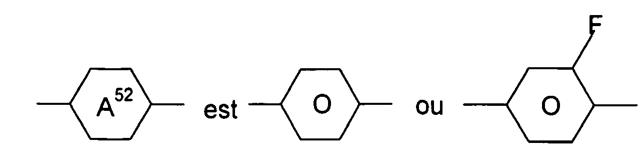
et

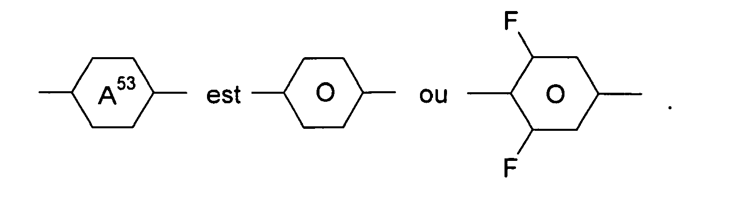

11. Affichage selon au moins l'une des revendications 1 à 10, **caractérisé en ce qu'**il contient un milieu cristallin liquide contenant
- 25 à 82 % de deux composés ou plus de la formule I,
- 1 à 45 % d'un ou de plusieurs composés de la formule II,
- 5 à 50 % d'un ou de plusieurs composés de la formule III et
- 10 à 50 % d'un ou de plusieurs composés choisis parmi le groupe de formules IV a1 à IV a6, IV b1 à IV b11, IV c1 à IV c5, IV d1 et IV d2.

12. Affichage à cristaux liquides selon au moins l'une des revendications 1 à 11, **caractérisé en ce qu'**il est adressé par une matrice d'éléments de commutation électrique non linéaires.

13. Milieu cristallin liquide présentant une anisotropie diélectriquement positive **caractérisé en ce qu'**il présente la composition spécifiée dans au moins l'une des revendications 1 à 11.

14. Utilisation d'un milieu selon la revendication 13 dans un affichage à cristaux liquides.
